(19) Europäisches Patentamt
European Patent Office
Office européen des brevets

(11) **EP 4 615 082 A1**

(12) **EUROPEAN PATENT APPLICATION**
published in accordance with Art. 153(4) EPC

(43) Date of publication:
**10.09.2025 Bulletin 2025/37**

(21) Application number: 23886366.6

(22) Date of filing: **03.11.2023**

(51) International Patent Classification (IPC):
*H04W 64/00* (2009.01)    *H04W 56/00* (2009.01)
*H04B 17/20* (2015.01)    *H04W 24/08* (2009.01)
*H04W 4/029* (2018.01)    *H04L 5/00* (2006.01)

(52) Cooperative Patent Classification (CPC):
**H04B 17/20; H04L 5/00; H04W 4/029; H04W 24/08;
H04W 56/00; H04W 64/00**

(86) International application number:
**PCT/KR2023/017524**

(87) International publication number:
**WO 2024/096672 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022  US 202263422453 P**

(71) Applicant: **LG Electronics Inc.
Yeongdeungpo-gu
Seoul 07336 (KR)**

(72) Inventors:
• **HUH, Joongkwan
  Seoul 06772 (KR)**

• **HWANG, Jinyup
  Seoul 06772 (KR)**
• **HWANG, Seunggye
  Seoul 06772 (KR)**
• **YANG, Yoonoh
  Seoul 06772 (KR)**
• **LEE, Sangwook
  Seoul 06772 (KR)**
• **PARK, Jinwoong
  Seoul 06772 (KR)**
• **NA, Yunsik
  Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **POSITIONING**

(57)    One disclosure of the present specification provides a method by which an LMF performs communication. The method may comprise the steps of: receiving, from a base station, a Tx TEG of the base station; receiving a TEG related to UE from the UE, and determining, on the basis of at least one of the Tx TEG of the base station and the TEG related to the UE, which method, between bandwidth aggregation positioning or single carrier positioning, to use to perform positioning.

FIG. 26

## Description

### TECHNICAL FIELD

The present disclosure relates to a radio communication.

### BACKGROUND ART

3rd generation partnership project (3GPP) long-term evolution (LTE) is a technology for enabling high-speed packe t communications. Many schemes have been proposed for the LTE objective including those that aim to reduce user and prov ider costs, improve service quality, and expand and improve coverage and system capacity. The 3GPP LTE requires reduced cost per bit, increased service availability, flexible use of a frequency band, a simple structure, an open interface, and adequat e power consumption of a terminal as an upper-level requirement.

Work has started in international telecommunication union (ITU) and 3GPP to develop requirements and specificati ons for new radio (NR) systems. 3GPP has to identify and develop the technology components needed for successfully stand ardizing the new RAT timely satisfying both the urgent market needs, and the more long-term requirements set forth by the IT U radio communication sector (ITU-R) international mobile telecommunications (IMT)-2020 process. Further, the NR shoul d be able to use any spectrum band ranging at least up to 100 GHz that may be made available for wireless communications e ven in a more distant future.

The NR targets a single technical framework addressing all usage scenarios, requirements and deployment scenarios including enhanced mobile broadband (eMBB), massive machine-type-communications (mMTC), ultra-reliable and low laten cy communications (URLLC), etc. The NR shall be inherently forward compatible.

Positioning based on 3GPP-based communications is being discussed. New positioning methods such as bandwidth aggregation positioning are being discussed to improve the accuracy of positioning. However, there has been no way to effici ently use bandwidth aggregation positioning in the past.

### DISCLOSURE

### TECHNICAL SOLUTION

In one aspect, a method for LMF to perform communication is provided. The method comprises: receiving the Tx T EG of a base station from the base station; receiving the TEG related to the UE from the UE; and determining whether to perf orm positioning in either bandwidth-aggregated positioning or single-carrier positioning, based on at least one of the TEG of t he base station and the TEG related to the UE.

In another aspect, a device is provided that implements the method.

In one aspect, a method is provided for performing communication by a UE. The method includes steps for transmit ting a TEG related to the UE to a LMF.

In another aspect, a device is provided that implements the method.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of a wireless device to which implementations of the present disclosure is applied.
FIG. 4 is a diagram showing an example of a communication structure that can be provided in a 6G system
FIG. 5 shows an example of an electromagnetic spectrum.
FIGS. 6a to 6c are signal flowcharts illustrating an exemplary UE triggered service request procedure.
FIG. 7 is a signal flowchart illustrating an exemplary network initiated service request procedure.
FIG. 8 is a first example of positioning based on DL-TDOA.
FIG. 9 is a second example of positioning based on DL-TDOA.
FIG. 10 is an example of positioning based on Multi-cell RTT.
FIG. 11 is an example of positioning based on UL-AOA.
FIG. 12 illustrates an example of a TAE according to a single RF structure in one embodiment of the present disclos ure.
FIG. 13 illustrates an example of measuring a time difference according to one embodiment of the present disclosur e.
FIG. 14 illustrates an example of calculating an RTT, according to one embodiment of the present disclosure.

FIG. 15 illustrates an example of multi-cell RTT positioning according to one embodiment of the present disclosure

FIG. 16 illustrates an example of measuring DL-RSTD according to one embodiment of the present disclosure.

FIG. 17 illustrates an example of performing DL-TDOA positioning, according to one embodiment of the present disclosure.

FIG. 18 is an example of a UE-assisted and UE-based positioning procedure, according to one embodiment of the present disclosure.

FIG. 19 is an example of a network-assisted positioning procedure according to one embodiment of the present disclosure.

FIG. 20 shows an example of the operation performed by LMF when DL-TDOA is used in one embodiment of the present disclosure.

FIG. 21 shows an example of the operation performed by LMF when UL-TDOA is used in one embodiment of the present disclosure.

FIG. 22 shows an example of the operation performed by LMF when Multi-cell RTT is used in one embodiment of the present disclosure.

FIG. 23 is an example of the probability of detection when TAE is zero in one embodiment of the present disclosure

FIGS. 24a to 24f show an example of the correlation power according to TAE in one embodiment of the present disclosure.

FIGS. 25a to 25d show an example of an accuracy gain according to TAE in another 100 MHz+100 MHz example of one embodiment of the present disclosure.

FIG. 26 shows an example of a procedure according to one embodiment of the present disclosure.

## MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regard to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein may be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

Although a user equipment (UE) is illustrated by way of example in the accompanying drawings, the illustrated UE may be referred to as a terminal, mobile equipment (ME), and the like. In addition, the UE may be a portable device such as a notebook computer, a mobile phone, a PDA, a smartphone, and a multimedia device or may be a non-portable device such as a PC or a vehicle-mounted device.

Hereinafter, a UE is used as an example of a wireless communication device (or a wireless device or wireless equipment) capable of wireless communication. An operation performed by a UE may be performed by a wireless communication device. A wireless communication device may also be referred to as a wireless device, wireless equipment, or the like. Hereinafter, AMF may mean an AMF node, SMF may mean an SMF node, and UPF may mean a UPF node.

A base station used below generally refers to a fixed station communicating with a wireless device and may also be referred as an evolved-NodeB (eNodeB), an evolved-NodeB (eNB), a base transceiver system (BTS), an access point, and a next generation NodeB (gNB).

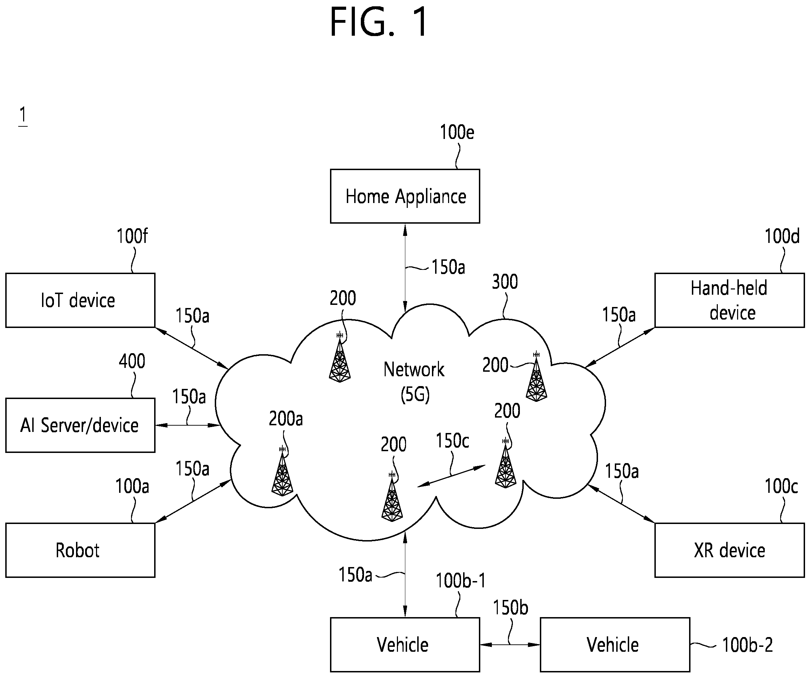

FIG. 1 shows an example of a communication system to which implementations of the present disclosure is applied.

The 5G usage scenarios shown in FIG. 1 are only exemplary, and the technical features of the present disclosure may be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

eMBB far surpasses basic mobile Internet access and covers abundant bidirectional work and media and entertainment applications in cloud and augmented reality. Data is one of 5G core motive forces and, in a 5G era, a dedicated voice service may not be provided for the first time. In 5G, it is expected that voice will be simply processed as an application program using data connection provided by a communication system. Main causes for increased traffic volume are due to an increase in the size of content and an increase in the number of applications requiring high data transmission rate. A streaming service (of audio and video), conversational video, and mobile Internet access will be more widely used as more devices are connected to the Internet. These many application programs require connectivity of an always turned-on state in order to push real-time information and alarm for users. Cloud storage and applications are rapidly increasing in a mobile communication platform and may be applied to both work and entertainment. The cloud storage is a special use case which accelerates growth of uplink data transmission rate. 5G is also used for remote work of cloud. When a tactile interface is used, 5G demands much lower end-to-end latency to maintain user good experience. Entertainment, for example, cloud gaming and video streaming, is another core element which increases demand for mobile broadband capability. Entertainment is essential for a smartphone and a tablet in any place including high mobility environments such as a train, a vehicle, and an airplane. Other use cases are augmented reality for entertainment and information search. In this case, the augmented reality requires very low latency and instantaneous data volume.

In addition, one of the most expected 5G use cases relates a function capable of smoothly connecting embedded sen sors in all fields, i.e., mMTC. It is expected that the number of potential Internet-of-things (IoT) devices will reach 204 hundr ed million up to the year of 2020. An industrial IoT is one of categories of performing a main role enabling a smart city, asset tracking, smart utility, agriculture, and security infrastructure through 5G.

URLLC includes a new service that will change industry through remote control of main infrastructure and an ultra-reliable/available low-latency link such as a self-driving vehicle. A level of reliability and latency is essential to control a sma rt grid, automatize industry, achieve robotics, and control and adjust a drone.

5G is a means of providing streaming evaluated as a few hundred megabits per second to gigabits per second and m ay complement fiber-to-the-home (FTTH) and cable-based broadband (or DOCSIS). Such fast speed is needed to deliver TV i n resolution of 4K or more (6K, 8K, and more), as well as virtual reality and augmented reality. Virtual reality (VR) and augm ented reality (AR) applications include almost immersive sports games. A specific application program may require a special network configuration. For example, for VR games, gaming companies need to incorporate a core server into an edge network server of a network operator in order to minimize latency.

Automotive is expected to be a new important motivated force in 5G together with many use cases for mobile comm unication for vehicles. For example, entertainment for passengers requires high simultaneous capacity and mobile broadband with high mobility. This is because future users continue to expect connection of high quality regardless of their locations and speeds. Another use case of an automotive field is an AR dashboard. The AR dashboard causes a driver to identify an object i n the dark in addition to an object seen from a front window and displays a distance from the object and a movement of the ob ject by overlapping information talking to the driver. In the future, a wireless module enables communication between vehicle s, information exchange between a vehicle and supporting infrastructure, and information exchange between a vehicle and oth er connected devices (e.g., devices accompanied by a pedestrian). A safety system guides alternative courses of a behavior so that a driver may drive more safely drive, thereby lowering the danger of an accident. The next stage will be a remotely contr olled or self-driven vehicle. This requires very high reliability and very fast communication between different self-driven vehi cles and between a vehicle and infrastructure. In the future, a self-driven vehicle will perform all driving activities and a drive $_r$ will focus only upon abnormal traffic that the vehicle cannot identify. Technical requirements of a self-driven vehicle deman d ultra-low latency and ultra-high reliability so that traffic safety is increased to a level that cannot be achieved by human bein g.

A smart city and a smart home/building mentioned as a smart society will be embedded in a high-density wireless s ensor network. A distributed network of an intelligent sensor will identify conditions for costs and energy-efficient maintenan ce of a city or a home. Similar configurations may be performed for respective households. All of temperature sensors, windo w and heating controllers, burglar alarms, and home appliances are wirelessly connected. Many of these sensors are typically 1 ow in data transmission rate, power, and cost. However, real-time HD video may be demanded by a specific type of device to perform monitoring.

Consumption and distribution of energy including heat or gas is distributed at a higher level so that automated contr ol of the distribution sensor network is demanded. The smart grid collects information and connects the sensors to each other using digital information and communication technology so as to act according to the collected information. Since this inform ation may include behaviors of a supply company and a consumer, the smart grid may improve distribution of fuels such as el ectricity by a method having efficiency, reliability, economic feasibility, production sustainability, and automation. The smart grid may also be regarded as another sensor network having low latency.

Mission critical application (e.g., e-health) is one of 5G use scenarios. A health part contains many application prog rams capable of enjoying benefit of mobile communication. A communication system may support remote treatment that prov ides clinical treatment in a faraway place. Remote treatment may aid in reducing a barrier against distance and improve acces s to medical services that cannot be continuously available in a faraway rural area. Remote treatment is also used to perform i mportant treatment and save lives in an emergency situation. The wireless sensor network based on mobile communication m ay provide remote monitoring and sensors for parameters such as heart rate and blood pressure.

Wireless and mobile communication gradually becomes important in the field of an industrial application. Wiring is high in installation and maintenance cost. Therefore, a possibility of replacing a cable with re-constructible wireless links is a n attractive opportunity in many industrial fields. However, in order to achieve this replacement, it is necessary for wireless c onnection to be established with latency, reliability, and capacity similar to those of the cable and management of wireless co nnection needs to be simplified. Low latency and a very low error probability are new requirements when connection to 5G is needed.

Logistics and freight tracking are important use cases for mobile communication that enables inventory and package tracking anywhere using a location-based information system. The use cases of logistics and freight typically demand low dat a rate but require location information with a wide range and reliability.

Referring to FIG. 1, the communication system 1 includes wireless devices 100a to 100f, base stations (BSs) 200, a nd a network 300. Although FIG. 1 illustrates a 5G network as an example of the network of the communication system 1, the implementations of the present disclosure are not limited to the 5G system, and may be applied to the future communication s ystem beyond the 5G system.

The BSs 200 and the network 300 may be implemented as wireless devices and a specific wireless device may oper ate as a BS/network node with respect to other wireless devices.

The wireless devices 100a to 100f represent devices performing communication using radio access technology (RA T) (e.g., 5G new RAT (NR)) or LTE) and may be referred to as communication/radio/5G devices. The wireless devices 100a t o 100f may include, without being limited to, a robot 100a, vehicles 100b-1 and 100b-2, an extended reality (XR) device 100c , a hand-held device 100d, a home appliance 100e, an IoT device 100f, and an artificial intelligence (AI) device/server 400. F or example, the vehicles may include a vehicle having a wireless communication function, an autonomous driving vehicle, an d a vehicle capable of performing communication between vehicles. The vehicles may include an unmanned aerial vehicle (U AV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a w earable device, a home appliance device, a digital signage, a vehicle, a robot, etc. The hand-held device may include a smartp hone, a smartpad, a wearable device (e.g., a smartwatch or a smartglasses), and a computer (e.g., a notebook). The home appli ance may include a TV, a refrigerator, and a washing machine. The IoT device may include a sensor and a smartmeter.

In the present disclosure, the wireless devices 100a to 100f may be called user equipments (UEs). A UE may includ e, for example, a cellular phone, a smartphone, a laptop computer, a digital broadcast terminal, a personal digital assistant (PD A), a portable multimedia player (PMP), a navigation system, a slate personal computer (PC), a tablet PC, an ultrabook, a veh icle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device re lated to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging a n object or a background of the virtual world into an object or a background of the real world. The hologram device may inclu de, for example, a device for implementing a stereoscopic image of 360 degrees by recording and reproducing stereoscopic in formation, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, s martbulbs, door locks, or various sensors.

The medical device may be, for example, a device used for the purpose of diagnosing, treating, relieving, curing, or preventing disease. For example, the medical device may be a device used for the purpose of diagnosing, treating, relieving, o r correcting injury or impairment. For example, the medical device may be a device used for the purpose of inspecting, replac ing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safet y. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environ ment.

The wireless devices 100a to 100f may be connected to the network 300 via the BSs 200. An AI technology may be applied to the wireless devices 100a to 100f and the wireless devices 100a to 100f may be connected to the AI server 400 via t he network 300. The network 300 may be configured using a 3G network, a 4G (e.g., LTE) network, a 5G (e.g., NR) network, and a beyond-5G network. Although the wireless devices 100a to 100f may communicate with each other through the BSs 20 0/network 300, the wireless devices 100a to 100f may perform direct communication (e.g., sidelink communication) with eac h other without passing through the BSs 200/network 300. For example, the vehicles 100b-1 and 100b-2 may perform direct c ommunication (e.g., vehicle-to-vehicle (V2V)/vehicle-to-everything (V2X) communication). The IoT device (e.g., a sensor) m ay perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/c onnections may be established through various RATs (e.g., 5G NR) such as uplink/downlink communication 150a, sidelink c ommunication (or device-to-device (D2D) communication) 150b, inter-base station communication 150c (e.g., relay, integrat ed access and backhaul (IAB)), etc. The wireless devices 100a to 100f and the BSs 200/the wireless devices 100a to 100f may transmit/receive radio signals to/from each other through the wireless communication/connections 150a, 150b and 150c. For e xample, the wireless communication/connections 150a, 150b and 150c may transmit/receive signals through various physical channels. To this end, at least a part of various configuration information configuring processes, various signal processing pro cesses (e.g., channel encoding/decoding, modulation/demodulation, and resource mapping/de-mapping), and resource allocati ng processes, for transmitting/receiving radio signals, may be performed based on the various proposals of the present disclos ure.

AI refers to the field of studying artificial intelligence or the methodology that may create it, and machine learning r efers to the field of defining various problems addressed in the field of AI and the field of methodology to solve them. Machi ne learning is also defined as an algorithm that increases the performance of a task through steady experience on a task.

Robot means a machine that automatically processes or operates a given task by its own ability. In particular, robots with the ability to recognize the environment and make self-determination to perform actions may be called intelligent robots. Robots may be classified as industrial, medical, home, military, etc., depending on the purpose or area of use. The robot may perform a variety of physical operations, such as moving the robot joints with actuators or motors. The movable robot also inc ludes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in mot ion, automatically adjusting speed such as adaptive cruise control, automatic driving along a set route, and automatically setti ng a route when a destination is set. The vehicle covers vehicles equipped with internal combustion engines, hybrid vehicles e quipped with internal combustion engines and electric motors, and electric vehicles equipped with electric motors, and may in clude trains, motorcycles, etc., as well as cars. Autonomous vehicles may be seen as robots with autonomous driving function s.

Extended reality is collectively referred to as VR, AR, and MR. VR technology provides objects and backgrounds o f real world only through computer graphic (CG) images. AR technology provides a virtual CG image on top of a real object i mage. MR technology is a CG technology that combines and combines virtual objects into the real world. MR technology is s imilar to AR technology in that they show real and virtual objects together. However, there is a difference in that in AR techn ology, virtual objects are used as complementary forms to real objects, while in MR technology, virtual objects and real objec ts are used as equal personalities.

NR supports multiples numerologies (and/or multiple subcarrier spacings (SCS)) to support various 5G services. Fo r example, if SCS is 15 kHz, wide area may be supported in traditional cellular bands, and if SCS is 30 kHz/60 kHz, dense-ur ban, lower latency, and wider carrier bandwidth may be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", F R2 may mean "above 6 GHz range," and may be referred to as millimeter wave (mmW). FR2 may include FR 2-1 and FR 2-2 , as shown in the examples in Table 1 and Table 2.

[Table 1]

| Frequency Range designation | | Corresponding frequency range | Subcarrier Spacing |
|---|---|---|---|
| FR1 | | 450MHz - 6000MHz | 15, 30, 60kHz |
| FR2 | FR2-1 | 24250MHz - 52600MHz | 60, 120, 240kHz |
| | FR2-2 | 57000MHz - 71000MHz | 120, 480, 960kHz |

As mentioned above, the numerical value of the frequency range of the NR system may be changed. For example, F R1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for e xample for communication for vehicles (e.g., autonomous driving).

[Table 2]

| Frequency Range designation | Corresponding frequency range | Subcarrier Spacing |
|---|---|---|
| FR1 | 410MHz - 7125MHz | 15, 30, 60kHz |

(continued)

| Frequency Range designation | | Corresponding frequency range | Subcarrier Spacing |
|---|---|---|---|
| FR2 | FR2-1 | 24250MHz - 52600MHz | 60, 120, 240kHz |
| | FR2-2 | 57000MHz - 71000MHz | 120, 480, 960kHz |

Here, the radio communication technologies implemented in the wireless devices in the present disclosure may incl ude narrowband internet-of-things (NB-IoT) technology for low-power communication as well as LTE, NR and 6G. For exam ple, NB-IoT technology may be an example of low power wide area network (LPWAN) technology, may be implemented in s pecifications such as LTE Cat NB1 and/or LTE Cat NB2, and may not be limited to the above-mentioned names. Additionall y, and/or alternatively, the radio communication technologies implemented in the wireless devices in the present disclosure m ay communicate based on LTE-M technology. For example, LTE-M technology may be an example of LPWAN technology a nd be called by various names such as enhanced machine type communication (eMTC). For example, LTE-M technology ma y be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be li mited to the above-mentioned names. Additionally, and/or alternatively, the radio communication technologies implemented i n the wireless devices in the present disclosure may include at least one of ZigBee, Bluetooth, and/or LPWAN which take int o account low-power communication, and may not be limited to the above-mentioned names. For example, ZigBee technolog y may generate personal area networks (PANs) associated with small/low-power digital communication based on various spe cifications such as IEEE 802.15.4 and may be called various names.

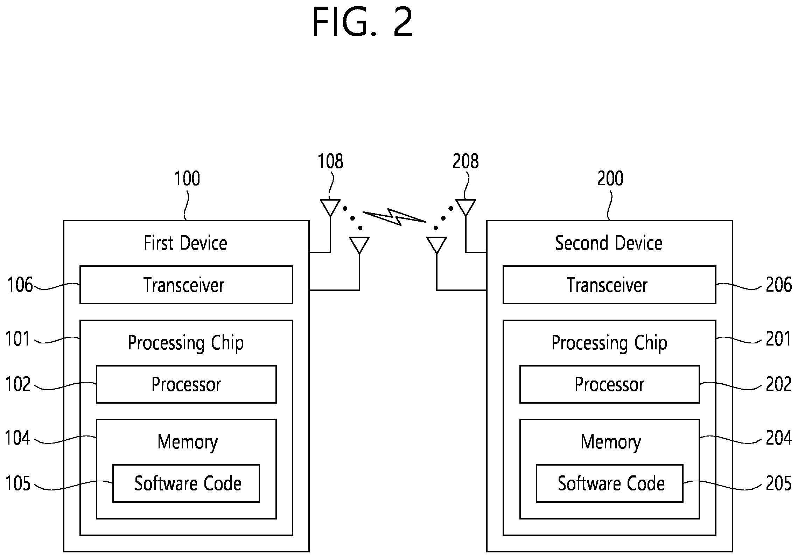

**FIG. 2 shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/ or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. F or example, the processor 102 may process information within the memory 104 to generate first information/signals and then t ransmit radio signals including the first information/signals through the transceiver 106. The processor 102 may receive radio signals including second information/signals through the transceiver 106 and then store information obtained by processing th e second information/signals in the memory 104.

The memory 104 may be operably connectable to the processor 102. The memory 104 may store various types of in formation and/or instructions. The memory 104 may store a software code 105 which implements instructions that, when exec uted by the processor 102, perform the descriptions, functions, procedures, suggestions, methods and/or operational flowchart s disclosed in the present disclosure. For example, the software code 105 may implement instructions that, when executed by t he processor 102, perform the descriptions, functions, procedures, suggestions, methods and/or operational flowcharts disclos ed in the present disclosure. For example, the software code 105 may control the processor 102 to perform one or more protoc ols. For example, the software code 105 may control the processor 102 to perform one or more layers of the radio interface pr otocol.

Herein, the processor 102 and the memory 104 may be a part of a communication modem/circuit/chip designed to i mplement RAT (e.g., LTE or NR). The transceiver 106 may be connected to the processor 102 and transmit and/or receive ra dio signals through one or more antennas 108. Each of the transceiver 106 may include a transmitter and/or a receiver. The tra nsceiver 106 may be interchangeably used with radio frequency (RF) unit(s). In the present disclosure, the first wireless devic e 100 may represent a communication modem/circuit/chip.

The second wireless device 200 may include at least one transceiver, such as a transceiver 206, at least one processi ng chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/ or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. F or example, the processor 202 may process information within the memory 204 to generate third information/signals and then transmit radio signals including the third information/signals through the transceiver 206. The processor 202 may receive radi o signals including fourth information/signals through the transceiver 106 and then store information obtained by processing t he fourth information/signals in the memory 204.

The memory 204 may be operably connectable to the processor 202. The memory 204 may store various types of in formation and/or instructions. The memory 204 may store a software code 205 which implements instructions that, when exec uted by the processor 202, perform the descriptions, functions, procedures, suggestions, methods and/or operational flowchart s disclosed in the present disclosure. For example, the software code 205 may implement instructions that, when executed by t he processor 202, perform the descriptions, functions, procedures, suggestions, methods and/or operational flowcharts disclos ed in the present disclosure. For example, the software code 205 may control the processor 202 to perform one or more protoc ols. For example, the software code 205 may control the processor 202 to perform one or more layers of the radio interface pr otocol.

Herein, the processor 202 and the memory 204 may be a part of a communication modem/circuit/chip designed to i mplement RAT (e.g., LTE or NR). The transceiver 206 may be connected to the processor 202 and transmit and/or receive ra dio signals through one or more antennas 208. Each of the transceiver 206 may include a transmitter and/or a receiver. The tra nsceiver 206 may be interchangeably used with RF unit. In the present disclosure, the second wireless device 200 may represe nt a communication modem/circuit/chip.

Hereinafter, hardware elements of the wireless devices 100 and 200 will be described more specifically. One or mor e protocol layers may be implemented by, without being limited to, one or more processors 102 and 202. For example, the on e or more processors 102 and 202 may implement one or more layers (e.g., functional layers such as physical (PHY) layer, m edia access control (MAC) layer, radio link control (RLC) layer, packet data convergence protocol (PDCP) layer, radio resour ce control (RRC) layer, and service data adaptation protocol (SDAP) layer). The one or more processors 102 and 202 may ge nerate one or more protocol data units (PDUs) and/or one or more service data unit (SDUs) according to the descriptions, fun ctions, procedures, suggestions, methods and/or operational flowcharts disclosed in the present disclosure. The one or more pr ocessors 102 and 202 may generate messages, control information, data, or information according to the descriptions, functio ns, procedures, suggestions, methods and/or operational flowcharts disclosed in the present disclosure. The one or more proce ssors 102 and 202 may generate signals (e.g., baseband signals) including PDUs, SDUs, messages, control information, data, or information according to the descriptions, functions, procedures, suggestions, methods and/or operational flowcharts disclo sed in the present disclosure and provide the generated signals to the one or more transceivers 106 and 206. The one or more p rocessors 102 and 202 may receive the signals (e.g., baseband signals) from the one or more transceivers 106 and 206 and acq uire the PDUs, SDUs, messages, control information, data, or information according to the descriptions, functions, procedures , suggestions, methods and/or operational flowcharts disclosed in the present disclosure.

The one or more processors 102 and 202 may be referred to as controllers, microcontrollers, microprocessors, or mi crocomputers. The one or more processors 102 and 202 may be implemented by hardware, firmware, software, or a combinati on thereof. As an example, one or more application specific integrated circuits (ASICs), one or more digital signal processors (DSPs), one or more digital signal processing devices (DSPDs), one or more programmable logic devices (PLDs), or one or m ore field programmable gate arrays (FPGAs) may be included in the one or more processors 102 and 202. The descriptions, fu nctions, procedures, suggestions, methods and/or operational flowcharts disclosed in the present disclosure may be implement ed using firmware or software and the firmware or software may be configured to include the modules, procedures, or functio ns. Firmware or software configured to perform the descriptions, functions, procedures, suggestions, methods and/or operatio nal flowcharts disclosed in the present disclosure may be included in the one or more processors 102 and 202 or stored in the one or more memories 104 and 204 so as to be driven by the one or more processors 102 and 202. The descriptions, functions , procedures, suggestions, methods and/or operational flowcharts disclosed in the present disclosure may be implemented usin g firmware or software in the form of code, commands, and/or a set of commands.

The one or more memories 104 and 204 may be connected to the one or more processors 102 and 202 and store vari ous types of data, signals, messages, information, programs, code, instructions, and/or commands. The one or more memories 104 and 204 may be configured by read-only memories (ROMs), random access memories (RAMs), electrically erasable prog rammable read-only memories (EPROMs), flash memories, hard drives, registers, cash memories, computer-readable storage media, and/or combinations thereof. The one or more memories 104 and 204 may be located at the interior and/or exterior of t he one or more processors 102 and 202. The one or more memories 104 and 204 may be connected to the one or more process ors 102 and 202 through various technologies such as wired or wireless connection.

The one or more transceivers 106 and 206 may transmit user data, control information, and/or radio signals/channel s, mentioned in the descriptions, functions, procedures, suggestions, methods and/or operational flowcharts disclosed in the pr esent disclosure, to one or more other devices. The one or more transceivers 106 and 206 may receive user data, control infor mation, and/or radio signals/channels, mentioned in the descriptions, functions, procedures, suggestions, methods and/or oper ational flowcharts disclosed in the present disclosure, from one or more other devices. For example, the one or more transceiv ers 106 and 206 may be connected to the one or more processors 102 and 202 and transmit and receive radio signals. For exa mple, the one or more processors 102 and 202 may perform control so that the one or more transceivers 106 and 206 may tran smit user data, control information, or radio signals to one or more other devices. The one or more processors 102 and 202 ma y perform control so that the one or more transceivers 106 and 206 may receive user data, control information, or radio signal s from one or more other devices.

The one or more transceivers 106 and 206 may be connected to the one or more antennas 108 and 208 and the one o r more transceivers 106 and 206 may be configured to transmit and receive user data, control information, and/or radio signals /channels, mentioned in the descriptions, functions, procedures, suggestions, methods and/or operational flowcharts disclosed in the present disclosure, through the one or more antennas 108 and 208. In the present disclosure, the one or more antennas 1 08 and 208 may be a plurality of physical antennas or a plurality of logical antennas (e.g., antenna ports).

The one or more transceivers 106 and 206 may convert received user data, control information, radio signals/channe ls, etc., from RF band signals into baseband signals in order to process received user data, control information, radio signals/c hannels, etc., using the one or more processors 102 and 202. The one or more transceivers 106 and 206 may convert the user d ata, control information, radio signals/channels, etc., processed using the one or more processors 102 and 202 from the base b and signals into the RF band signals. To this end, the one or more transceivers 106 and 206 may include (analog) oscillators a nd/or filters. For example, the one or more transceivers 106 and 206 can up-convert OFDM baseband signals to OFDM signal s by their (analog) oscillators and/or filters under the control of the one or more processors 102 and 202 and transmit the up-c onverted OFDM signals at the carrier frequency. The one or more transceivers 106 and 206 may receive OFDM signals at a c arrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device i n UL and as a transmitting device in DL. Hereinafter, for convenience of description, it is mainly assumed that the first wirele ss device 100 acts as the UE, and the second wireless device 200 acts as the BS. For example, the processor(s) 102 connected to, mounted on or launched in the first wireless device 100 may be configured to perform the UE behavior according to an im plementation of the present disclosure or control the transceiver(s) 106 to perform the UE behavior according to an implemen tation of the present disclosure. The processor(s) 202 connected to, mounted on or launched in the second wireless device 200 may be configured to perform the BS behavior according to an implementation of the present disclosure or control the transce iver(s) 206 to perform the BS behavior according to an implementation of the present disclosure.

In the present disclosure, a BS is also referred to as a node B (NB), an eNode B (eNB), or a gNB.

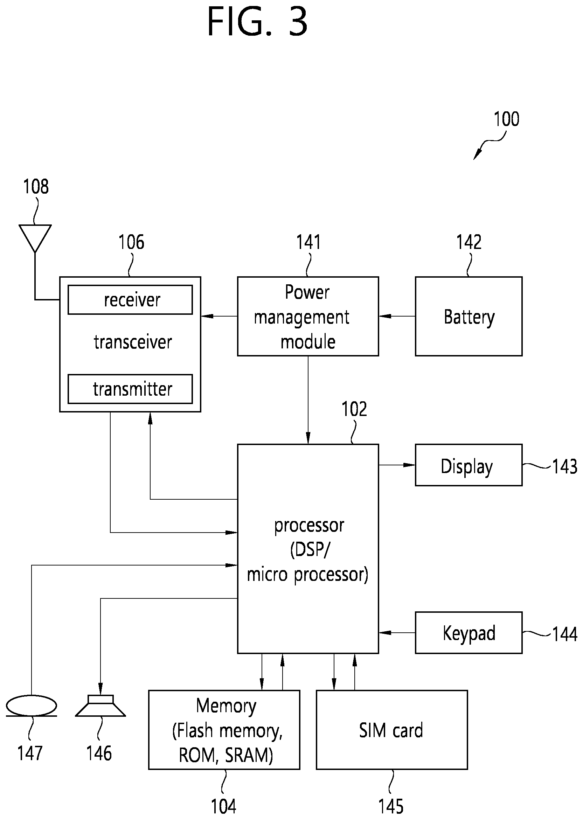

FIG. 3 shows an example of a wireless device to which implementations of the present disclosure is applied.

The wireless device may be implemented in various forms according to a use-case/service (refer to FIG. 1).

Referring to FIG. 3, wireless devices 100 and 200 may correspond to the wireless devices 100 and 200 of FIG. 2 an d may be configured by various elements, components, units/portions, and/or modules. For example, each of the wireless devi ces 100 and 200 may include a communication unit 110, a control unit 120, a memory unit 130, and additional components 14 0. The communication unit 110 may include a communication circuit 112 and transceiver(s) 114. For example, the communic ation circuit 112 may include the one or more processors 102 and 202 of FIG. 2 and/or the one or more memories 104 and 20 4 of FIG. 2. For example, the transceiver(s) 114 may include the one or more transceivers 106 and 206 of FIG. 2 and/or the on e or more antennas 108 and 208 of FIG. 2. The control unit 120 is electrically connected to the communication unit 110, the m emory unit 130, and the additional components 140 and controls overall operation of each of the wireless devices 100 and 200 . For example, the control unit 120 may control an electric/mechanical operation of each of the wireless devices 100 and 200 b ased on programs/code/commands/information stored in the memory unit 130. The control unit 120 may transmit the informa tion stored in the memory unit 130 to the exterior (e.g., other communication devices) via the communication unit 110 throug h a wireless/wired interface or store, in the memory unit 130, information received through the wireless/wired interface from t he exterior (e.g., other communication devices) via the communication unit 110.

The additional components 140 may be variously configured according to types of the wireless devices 100 and 200 . For example, the additional components 140 may include at least one of a power unit/battery, input/output (I/O) unit (e.g., au dio I/O port, video I/O port), a driving unit, and a computing unit. The wireless devices 100 and 200 may be implemented in t he form of, without being limited to, the robot (100a of FIG. 1), the vehicles (100b-1 and 100b-2 of FIG. 1), the XR device (1 00c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (o r a finance device), a security device, a climate/environment device, the AI server/device (400 of FIG.

1), the BSs (200 of FIG . 1), a network node, etc. The wireless devices 100 and 200 may be used in a mobile or fixed place according to a use-exampl e/service.

In FIG. 3, the entirety of the various elements, components, units/portions, and/or modules in the wireless devices 1 00 and 200 may be connected to each other through a wired interface or at least a part thereof may be wirelessly connected thr ough the communication unit 110. For example, in each of the wireless devices 100 and 200, the control unit 120 and the com munication unit 110 may be connected by wire and the control unit 120 and first units (e.g., 130 and 140) may be wirelessly c onnected through the communication unit 110. Each element, component, unit/portion, and/or module within the wireless dev ices 100 and 200 may further include one or more elements. For example, the control unit 120 may be configured by a set of o ne or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memo ry, a non-volatile memory, and/or a combination thereof.

<Operating bands of NR>.

The operating bands in NR are as follows

The operating bands in Table 3 below are the refarmed operating bands from the operating bands of LTE/LTE-A. T his is referred to as the FR1 band.

[Table 3]

| NR Operatin g band | Uplink (UL) Operating band | Donwlink(DL) Operating band | Duplex Mode |
|---|---|---|---|
| | $F_{UL\_low}$ - $F_{UL\_high}$ | $F_{DL\_low}$ - $F_{DL\_high}$ | |
| n1 | 1920 MHz - 1980 MHz | 2110 MHz - 2170 MHz | FDD |
| n2 | 1850 MHz - 1910 MHz | 1930 MHz - 1990 MHz | FDD |
| n3 | 1710 MHz - 1785 MHz | 1805 MHz - 1880 MHz | FDD |
| n5 | 824 MHz - 849 MHz | 869 MHz - 894 MHz | FDD |
| n7 | 2500 MHz - 2570 MHz | 2620 MHz - 2690 MHz | FDD |
| n8 | 880 MHz - 915 MHz | 925 MHz - 960 MHz | FDD |
| n12 | 699 MHz - 716 MHz | 729 MHz - 746 MHz | FDD |
| n20 | 832 MHz - 862 MHz | 791 MHz - 821 MHz | FDD |
| n25 | 1850 MHz - 1915 MHz | 1930 MHz - 1995 MHz | FDD |
| n28 | 703 MHz - 748 MHz | 758 MHz - 803 MHz | FDD |
| n34 | 2010 MHz - 2025 MHz | 2010 MHz - 2025 MHz | TDD |
| n38 | 2570 MHz - 2620 MHz | 2570 MHz - 2620 MHz | TDD |
| n39 | 1880 MHz - 1920 MHz | 1880 MHz - 1920 MHz | TDD |
| n40 | 2300 MHz - 2400 MHz | 2300 MHz - 2400 MHz | TDD |
| n41 | 2496 MHz - 2690 MHz | 2496 MHz - 2690 MHz | TDD |
| n50 | 1432 MHz - 1517 MHz | 1432 MHz - 1517 MHz | TDD1 |
| n51 | 1427 MHz - 1432 MHz | 1427 MHz - 1432 MHz | TDD |
| n66 | 1710 MHz - 1780 MHz | 2110 MHz - 2200 MHz | FDD |
| n70 | 1695 MHz - 1710 MHz | 1995 MHz - 2020 MHz | FDD |
| n71 | 663 MHz - 698 MHz | 617 MHz - 652 MHz | FDD |
| n74 | 1427 MHz - 1470 MHz | 1475 MHz - 1518 MHz | FDD |
| n75 | N/A | 1432 MHz - 1517 MHz | SDL |
| n76 | N/A | 1427 MHz - 1432 MHz | SDL |
| n77 | 3300 MHz - 4200 MHz | 3300 MHz - 4200 MHz | TDD |
| n78 | 3300 MHz - 3800 MHz | 3300 MHz - 3800 MHz | TDD |

(continued)

| NR Operatin g band | Uplink (UL) Operating band | Donwlink(DL) Operating band | Duplex Mode |
|---|---|---|---|
| | $F_{UL\_low}$ - $F_{UL\_high}$ | $F_{DL\_low}$ - $F_{DL\_high}$ | |
| n79 | 4400 MHz - 5000 MHz | 4400 MHz - 5000 MHz | TDD |
| n80 | 1710 MHz - 1785 MHz | N/A | SUL |
| n81 | 880 MHz - 915 MHz | N/A | SUL |
| n82 | 832 MHz - 862 MHz | N/A | SUL |
| n83 | 703 MHz - 748 MHz | N/A | SUL |
| n84 | 1920 MHz - 1980 MHz | N/A | SUL |
| n86 | 1710 MHz - 1780 MHz | N/A | SUL |

The table below shows the NR operating band defined at high frequencies. This is called the FR2 band.

[Table 4]

| NR Operating band | Uplink (UL) Operating band | Donwlink(DL) Operating band | Duplex Mode |
|---|---|---|---|
| | $F_{UL\_low}$ - FUL_high | $F_{DL\_low}$ - $F_{DL\_high}$ | |
| n257 | 26500 MHz - 29500 MHz | 26500 MHz - 29500 MHz | TDD |
| n258 | 24250 MHz - 27500 MHz | 24250 MHz - 27500 MHz | TDD |
| n259 | 37000 MHz - 40000 MHz | 37000 MHz - 40000 MHz | TDD |
| n260 | 37000 MHz - 40000 MHz | 37000 MHz - 40000 MHz | FDD |
| n261 | 27500 MHz - 28350 MHz | 27500 MHz - 28350 MHz | FDD |

<6G System General>

A 6G (wireless communication) system has purposes such as (i) very high data rate per device, (ii) a very large num ber of connected devices, (iii) global connectivity, (iv) very low latency, (v) decrease in energy consumption of battery-free Io T devices, (vi) ultra-reliable connectivity, and (vii) connected intelligence with machine learning capacity. The vision of the 6 G system may include four aspects such as "intelligent connectivity", "deep connectivity", "holographic connectivity" and "u biquitous connectivity", and the 6G system may satisfy the requirements shown in Table 4 below. That is, Table 4 shows the r equirements of the 6G system.

[Table 5]

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency comm unications (URLLC), massive machine type communications (mMTC), AI integrated communication, tactile Internet, high th roughput, high network capacity, high energy efficiency, low backhaul and access network congestion and enhanced data sec urity.

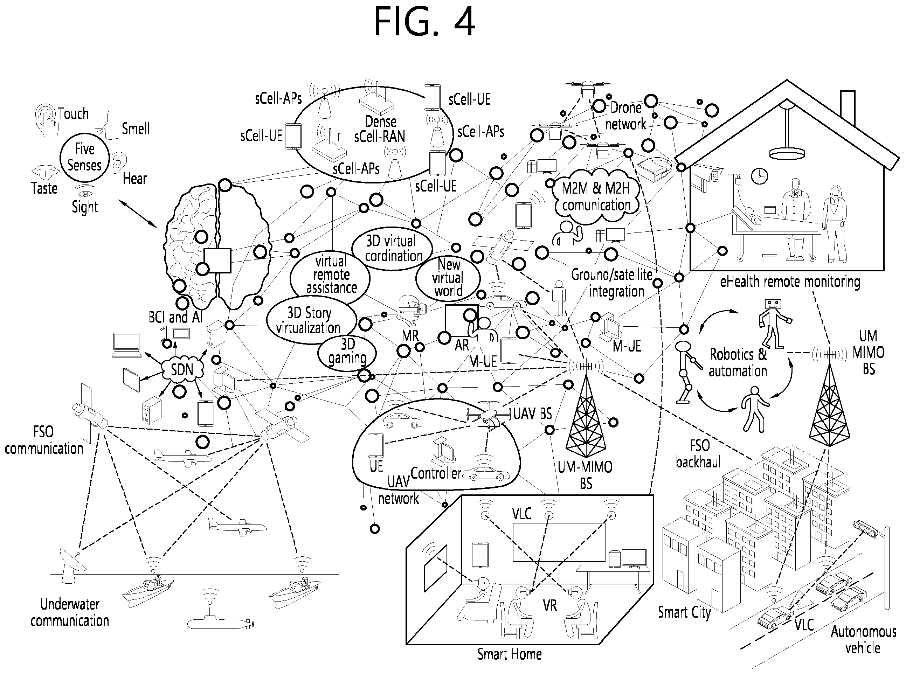

FIG. 4 is a diagram showing an example of a communication structure that can be provided in a 6G system.

The 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In addition, in 6G, new network characteristics may be as follows.

- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimemtion connectivity: Access to networks and core network functions of drones and very low earth orbit satellites will establish super 3D connection in 6G ubiquitous.

In the new network characteristics of 6G, several general requirements may be as follows.

- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduces costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5GB network in order to ensure flexibility, reconfigurability and programmability.

**<Core implementation technology of 6G system>**

Artificial Intelligence

Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, but deep learning have been focused on the wireless resource management and allocation field. However, such studies are gradually developed to the MAC layer and the physical layer, and, particularly, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep lear ning, signal estimation and detection based on deep learning, multiple input multiple output (MIMO) mechanisms based on d eep learning, resource scheduling and allocation based on AI, etc. may be included.

Machine learning may be used for channel estimation and channel tracking and may be used for power allocation, in terference cancellation, etc. in the physical layer of DL. In addition, machine learning may be used for antenna selection, pow er control, symbol detection, etc. in the MIMO system.

Machine learning refers to a series of operations to train a machine in order to create a machine which can perform t asks which cannot be performed or are difficult to be performed by people. Machine learning requires data and learning mode ls. In machine learning, data learning methods may be roughly divided into three methods, that is, supervised learning, unsupe rvised learning and reinforcement learning.

Neural network learning is to minimize output error. Neural network learning refers to a process of repeatedly input ting training data to a neural network, calculating the error of the output and target of the neural network for the training data, backpropagating the error of the neural network from the output layer of the neural network to an input layer in order to reduc e the error and updating the weight of each node of the neural network.

Supervised learning may use training data labeled with a correct answer and the unsupervised learning may use train ing data which is not labeled with a correct answer. That is, for example, in case of supervised learning for data classification, training data may be labeled with a category. The labeled training data may be input to the neural network, and the output (cat egory) of the neural network may be compared with the label of the training data, thereby calculating the error. The calculated error is backpropagated from the neural network backward (that is, from the output layer to the input layer), and the connectio n weight of each node of each layer of the neural network may be updated according to backpropagation. Change in updated c onnection weight of each node may be determined according to the learning rate. Calculation of the neural network for input d ata and backpropagation of the error may configure a learning cycle (epoch). The learning data is differently applicable accor ding to the number of repetitions of the learning cycle of the neural network. For example, in the early phase of learning of th e neural network, a high learning rate may be used to increase efficiency such that the neural network rapidly ensures a certai n level of performance and, in the late phase of learning, a low learning rate may be used to increase accuracy.

The learning method may vary according to the feature of data. For example, for the purpose of accurately predictin g data transmitted from a transmitter in a receiver in a communication system, learning may be performed using supervised le arning rather than unsupervised learning or reinforcement learning.

The learning model corresponds to the human brain and may be regarded as the most basic linear model. However, a paradigm of machine learning using a neural network structure having high complexity, such as artificial neural networks, a s a learning model is referred to as deep learning.

Neural network cores used as a learning method may roughly include a deep neural network (DNN) method, a conv olutional deep neural network (CNN) method, a recurrent Boltzmman machine (RNN) method and a spiking neural network ( SNN). Such a learning model is applicable.

THz (Terahertz) Communication

A data rate may increase by increasing bandwidth. This may be performed by using sub-TH communication with wi de bandwidth and applying advanced massive MIMO technology. THz waves which are known as sub-millimeter radiation, g enerally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communic ation. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical ba nd but is at the border of the optical band and is just behind an RF band. Accordingly, the band of 300 GHz to 3 THz has simi larity with RF.

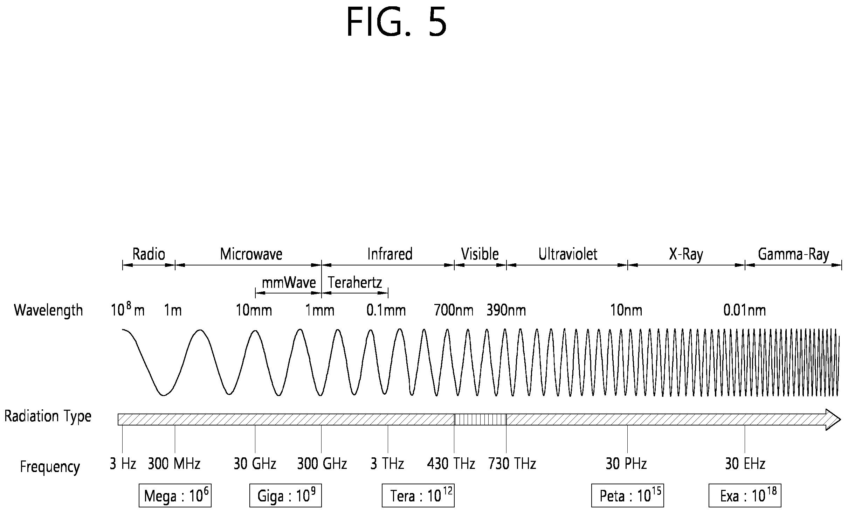

FIG. 5 shows an example of an electromagnetic spectrum.

The main characteristics of THz communication include (i) bandwidth widely available to support a very high data r ate and (ii) high path loss occurring at a high frequency (a high directional antenna is indispensable). A narrow beam width ge nerated in the high directional antenna reduces interference. The small wavelength of a THz signal allows a larger number of antenna elements to be integrated with a device and BS operating in this band. Therefore, an advanced adaptive arrangement t echnology capable of overcoming a range limitation may be used.

Large-scale MIMO

One of core technologies for improving spectrum efficiency is MIMO technology. When MIMO technology is impr oved, spectrum efficiency is also improved. Accordingly, massive MIMO technology will be important in the 6G system. Sin ce MIMO technology uses multiple paths, multiplexing technology and beam generation and management technology suitabl e for the THz band should be significantly considered such that data signals are transmitted through one or more paths.

Hologram Beamforming

Beamforming is a signal processing procedure that adjusts an antenna array to transmit radio signals in a specific dir ection. This is a subset of smart antennas or advanced antenna systems. Beamforming technology has several advantages, suc h as high signal-to-noise ratio, interference prevention and rejection, and high network efficiency. Hologram Beamforming (H BF) is a new beamforming method that differs significantly from MIMO systems because this uses a software-defined antenn a. HBF will be a very effective approach for efficient and flexible transmission and reception of signals in multi-antenna com munication devices in 6G.

Optical wireless technology

Optical wireless communication (OWC) is a form of optical communication that uses visible light, infrared light (IR ), or ultraviolet light (UV) to carry signals. OWC operating in the visible light band (e.g., 390 to 750 nm) is commonly referre d to as visible light communication (VLC). VLC implementations can utilize light-emitting diodes (LEDs). VLC can be used in a variety of applications, including wireless local area networks, wireless personal area networks, and vehicular networks.

VLC has several advantages over RF-based technologies. First, the spectrum occupied by VLC is free/-unlicensed an d can provide extensive bandwidth (THz-level bandwidth). Second, VLC rarely causes significant interference to other electro magnetic devices, therefore, VLC can be applied in sensitive electromagnetic interference applications such as aircraft and ho spitals. Third, VLC has strengths in communication security and privacy. The transmission medium of VLC-based networks, namely visible light, cannot pass through walls and other opaque obstacles. Therefore, the transmission range of VLC can be l imited to indoors, which can protect users' privacy and sensitive information. Fourth, VLC can use any light source as a base s tation, eliminating the need for expensive base stations.

Free-space optical communication (FSO) is an optical communication technology that uses light propagating in free space, such as air, outer space, and vacuum, to wirelessly transmit data for telecommunications or computer networking. FSO can be used as a point-to-point OWC system on the ground. FSO can operate in the near-infrared frequency (750-1600 nm). L aser transmitters may be used in FSO implementations, and FSO can provide high data rates (e.g., 10 Gbit/s), providing a pote ntial solution to backhaul bottlenecks.

These OWC technologies are planned for 6G communications in addition to RF-based communications for all possi ble device-to-access networks. These networks will access network-to-backhaul/fronthaul network connections. OWC techno logy has already been in use since 4G communication systems, but will be more widely used to meet the needs of 6G commu nication systems. OWC technologies such as light fidelity, visible light communication, optical camera communication, and F SO communication based on optical bands are already well-known technologies. Communication based on optical wireless te chnology can provide extremely high data rates, low latency, and secure communication.

Light Detection And Ranging (LiDAR) is also based on the optical band and can be utilized in 6G communications for ultra-high resolution 3D mapping. LiDAR is a remote sensing method that uses near-infrared, visible, and ultraviolet light to illuminate an object, and the reflected light is detected by a light sensor to measure distance. LiDAR can be used for fully a utomated driving of cars.

FSO Backhaul Network

The characteristics of the transmitter and receiver of the FSO system are similar to those of an optical fiber network. Accordingly, data transmission of the FSO system similar to that of the optical fiber system. Accordingly, FSO may be a goo d technology for providing backhaul connection in the 6G system along with the optical fiber network. When FSO is used, ve ry long-distance communication is possible even at a distance of 10,000 km or more. FSO supports mass backhaul connection s for remote and non-remote areas such as sea, space, underwater and isolated islands. FSO also supports cellular base station connections.

Non-Terrestrial Networks (NTN)

The 6G system will integrate terrestrial and aerial networks to support vertically expanding user communications. 3 D BS will be delivered via low-orbit satellites and UAVs. Adding a new dimension in terms of altitude and associated degree s of freedom makes 3D connectivity quite different from traditional 2D networks. NR considers Non-Terrestrial Networks (N TNs) as one way to accomplish this. An NTN is a network or network segment that uses RF resources aboard a satellite (or U AS platform). There are two common scenarios for NTNs that provide access to user equipment: transparent payloads and reg enerative payloads. The following are the basic elements of an NTN.

- One or more sat-gateways that connect the NTN to the public data network.
- GEO satellites are fed by one or several satellite gateways deployed across the satellite target range (e.g., regional or continental coverage). We assume that the UEs in a cell are served by only one sat-gateway.
- Non-GEO satellites that are continuously serviced by one or multiple satellite gateways at a time. The system ensu res service and feeder link continuity between successively serviced satellite gateways with a time duration sufficient to allow for mobility anchoring and handover.
- The feeder link or radio link between the satellite gateway and the satellite (or UAS platform).
- The service link or radio link between the user equipment and the satellite (or UAS platform).
- A satellite (or UAS platform) that can implement transparent or regenerative (with onboard processing) payloads. Satellite (or UAS platform) generated beams typically produce multiple beams for a given service area, depending on the field of view. The footprint of the beam is typically elliptical. The field of view of the satellite (or UAS platform) depends on the o nboard antenna diagram and the minimum angle of attack.
- Transparent payload: Radio frequency filtering, frequency conversion, and amplification, so the waveform signal r epeated by the payload is unchanged.
- Regenerative payload: radio frequency filtering, frequency conversion and amplification, demodulation/decryption , switching and/or routing, and coding/modulation. This is effectively the same as having all or part of the base station functio ns (e.g., gNB) on board a satellite (or UAS platform).
- For satellite deployments, optionally an inter-satellite link (ISL). This requires a regenerative payload on the satell ite. ISLs can operate at RF frequencies or in the optical band.
- User equipment is served by satellites (or UAS platforms) within the targeted coverage area.

Typically, GEO satellites and UAS are used to provide continental, regional, or local services.

Typically, constellations in LEO and MEO are used to provide coverage in both the Northern and Southern Hemisp heres. In some cases, constellations can also provide global coverage, including polar regions. The latter requires proper orbit al inclination, sufficient beams generated, and links between satellites.

Quantum Communication

Quantum communication is a next-generation communication technology that can overcome the limitations of conv entional communication such as security and high-speed computation by applying quantum mechanical properties to the field of information and communication. Quantum communication provides a means of generating, transmitting, processing, and st oring information that cannot be expressed in the form of 0s and 1s according to the binary bit information used in existing co mmunication technologies. In conventional communication technologies, wavelengths or amplitudes are used to transmit info rmation between the transmitting and receiving ends, but in quantum communication, photons, the smallest unit of light, are u sed to transmit information between the transmitting and receiving ends. In particular, in the case of quantum communication, quantum uncertainty and quantum irreversibility can be used for the polarization or phase difference of photons (light), so qua ntum communication has the characteristic of being able to communicate with perfect security. In addition, quantum commun ication can also enable ultra-high-speed communication using quantum entanglement under certain conditions.

Cell-free Communication

Tight integration of multiple frequencies and heterogeneous communication technologies is critical in 6G systems. As a result, users can seamlessly move from one network to another without having to create any manual configurations on th eir devices. The best network is automatically selected from the available communication technologies. This will break the li mitations of the cell concept in wireless communication. Currently, user movement from one cell to other causes too many ha ndovers in dense networks, resulting in handover failures, handover delays, data loss, and ping-pong effects. 6G cell-free com munication will overcome all this and provide better QoS.

Cell-free communication is defined as "a system in which a large number of geographically distributed antennas (A Ps) cooperatively serve a small number of terminals using the same time/frequency resources with the help of a fronthaul net work and a CPU". A single terminal is served by a set of multiple APs, which is called an AP cluster. There are several ways t o form AP clusters, among which the method of configuring AP clusters with APs that can significantly contribute to improvi ng the reception performance of the terminal is called the terminal-centered clustering method, and when using this method, t he configuration is dynamically updated as the terminal moves. By adopting this device-centric AP clustering technique, the d evice is always at the center of the AP cluster and is therefore free from inter-cluster interference that can occur when the devi ce is located at the boundary of the AP cluster. This cell-free communication will be achieved through multi-connectivity and multi-tier hybrid technologies and different heterogeneous radios in the device.

Integration of Wireless Information and Energy Transfer (WIET)

WIET uses the same field and wave as a wireless communication system. In particular, a sensor and a smartphone w ill be charged using wireless power transfer during communication. WIET is a promising technology for extending the life of battery charging wireless systems. Therefore, devices without batteries will be supported in 6G communication.

Integration of Wireless Communication and Sensing

An autonomous wireless network is a function for continuously detecting a dynamically changing environment state and exchanging information between different nodes. In 6G, sensing will be tightly integrated with communication to support autonomous systems.

Integrated Access and Backhaul Network

In 6G, the density of access networks will be enormous. Each access network is connected by optical fiber and back haul connection such as FSO network. To cope with a very large number of access networks, there will be a tight integration b etween the access and backhaul networks.

Big Data Analysis

Big data analysis is a complex process for analyzing various large data sets or big data. This process finds informati on such as hidden data, unknown correlations, and customer disposition to ensure complete data management. Big data is coll ected from various sources such as video, social networks, images and sensors. This technology is widely used for processing massive data in the 6G system.

Reconfigurable Intelligent Surface

There is a large body of research that considers the radio environment as a variable to be optimized along with the tr ansmitter and receiver. The radio environment created by this approach is referred to as a Smart Radio Environment (SRE) or Intelligent Radio Environment (IRE) to highlight its fundamental differences from past design and optimization criteria. Vario us terms have been proposed for the reconfigurable intelligent antenna (or intelligent reconfigurable antenna technology) tech nology that enables SRE, including Reconfigurable Metasurfaces, Smart Large Intelligent Surfaces (SLIS), Large Intelligent S urfaces (LIS), Reconfigurable Intelligent Surface (RIS), and Intelligent Reflecting Surface (IRS).
In the case of THz band signals, there are many shadowed areas caused by obstacles due to the strong straightness o f the signal, and RIS technology is important to expand the communication area by installing RIS near these shadowed areas, strengthening communication stability and enabling additional value-added services. RIS is an artificial surface made of elect romagnetic materials that can alter the propagation of incoming and outgoing radio waves. While RIS can be seen as an exten sion of massive MIMO, it has a different array structure and operating mechanism than massive MIMO. RIS also has the adva ntage of lower power consumption because it operates as a reconfigurable reflector with passive elements, meaning it only pa ssively reflects the signal without using an active RF chain. In addition, each of the passive reflectors in the RIS must indepen dently adjust the phase shift of the incident signal, which can be advantageous for wireless communication channels. By prop erly adjusting the phase shift through the RIS controller, the reflected signal can be gathered at the target receiver to boost the received signal power.
In addition to reflecting radio signals, there are also RISs that can adjust transmission and refraction properties, and these RISs are mainly used for 021 (Outdoor to Indoor). Recently, STAR-RIS (Simultaneous Transmission and Reflection RI S), which provides transmission while reflecting, has also been actively researched.

Metaverse

Metaverse is a portmanteau of the words "meta" meaning virtual, transcendent, and "universe" meaning space. Gene rally speaking, the metaverse is a three-dimensional virtual space where the same social and economic activities as in the real world are commonplace.
Extended Reality (XR), a key technology enabling the Metaverse, is the fusion of the virtual and the real, which can extend the experience of reality and provide a unique sense of immersion. The high bandwidth and low latency of 6G network s will enable users to experience more immersive virtual reality (VR) and augmented reality (AR) experiences.

Autonomous Driving, Self-driving

For perfect autonomous driving, vehicles must communicate with each other to inform each other of dangerous situ ations, or with infrastructure such as parking lots and traffic lights to check information such as the location of parking inform ation and signal change times. Vehicle-to-Everything (V2X), a key element in building an autonomous driving infrastructure, is a technology that enables vehicles to communicate and share information with various elements on the road, such as vehicl e-to-vehicle (V2V) and vehicle-to-infrastructure (V2I), for autonomous driving.

In order to maximize the performance of autonomous driving and ensure high safety, fast transmission speeds and 1 ow latency technologies are essential. In addition, in the future, autonomous driving will go beyond delivering warnings and g uidance messages to the driver to actively intervene in vehicle operation and directly control the vehicle in dangerous situatio ns, and the amount of information that needs to be transmitted and received will be enormous, so 6G is expected to maximize autonomous driving with faster transmission speeds and lower latency than 5G.

Unmanned Aerial Vehicle (UAV)

An unmanned aerial vehicle (UAV) or drone will be an important factor in 6G wireless communication. In most cas es, a high-speed data wireless connection is provided using UAV technology. A base station entity is installed in the UAV to provide cellular connectivity. UAVs have certain features, which are not found in fixed base station infrastructures, such as ea sy deployment, strong line-of-sight links, and mobility-controlled degrees of freedom. During emergencies such as natural dis asters, the deployment of terrestrial telecommunications infrastructure is not economically feasible and sometimes services ca nnot be provided in volatile environments. The UAV can easily handle this situation. The UAV will be a new paradigm in the field of wireless communications. This technology facilitates the three basic requirements of wireless networks, such as eMB B, URLLC and mMTC. The UAV can also serve a number of purposes, such as network connectivity improvement, fire detec tion, disaster emergency services, security and surveillance, pollution monitoring, parking monitoring, and accident monitorin g. Therefore, UAV technology is recognized as one of the most important technologies for 6G communication.

Block-chain

A blockchain will be important technology for managing large amounts of data in future communication systems. T he blockchain is a form of distributed ledger technology, and distributed ledger is a database distributed across numerous nod es or computing devices. Each node duplicates and stores the same copy of the ledger. The blockchain is managed through a p eer-to-peer (P2P) network. This may exist without being managed by a centralized institution or server. Blockchain data is col lected together and organized into blocks. The blocks are connected to each other and protected using encryption. The blockc hain completely complements large-scale IoT through improved interoperability, security, privacy, stability and scalability. A ccordingly, the blockchain technology provides several functions such as interoperability between devices, high-capacity data traceability, autonomous interaction of different IoT systems, and large-scale connection stability of 6G communication syste ms.

<Service Request procedures>

The service request procedure is used to request establishment of a secure connection to AMF by a UE or a 5G core network (5GC). The service request procedure is used to activate the user plane connection of the established PDU session ev en when the UE is in a CM-IDLE state and a CM-CONNECTED state. For reference, in order to reflect NAS signaling conn ection between the AMF and the UE, two CM states of the CM-IDLE state and the CM-CONNECTED state are used.

The UE does not initiate a service request procedure if there is an ongoing service request procedure.

The service request procedure includes a service request procedure initiated by the UE (i.e., a UE triggered service r equest) and a service request procedure initiated by the network (i.e., a network triggered service request).

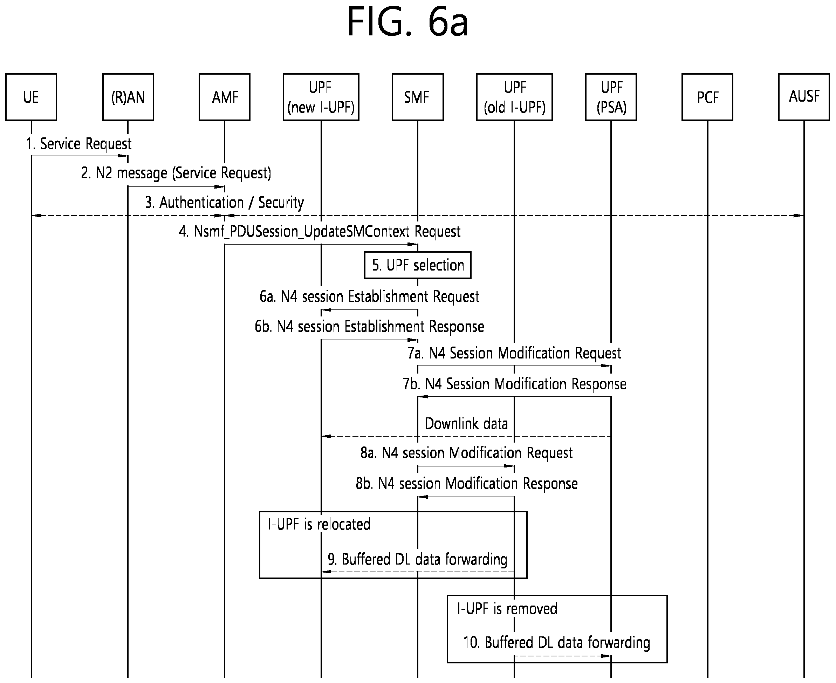

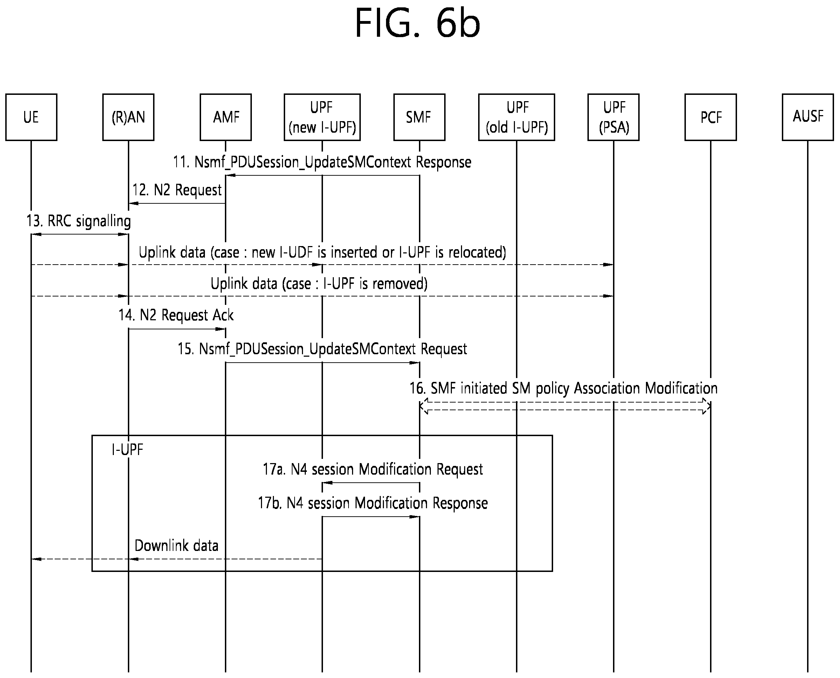

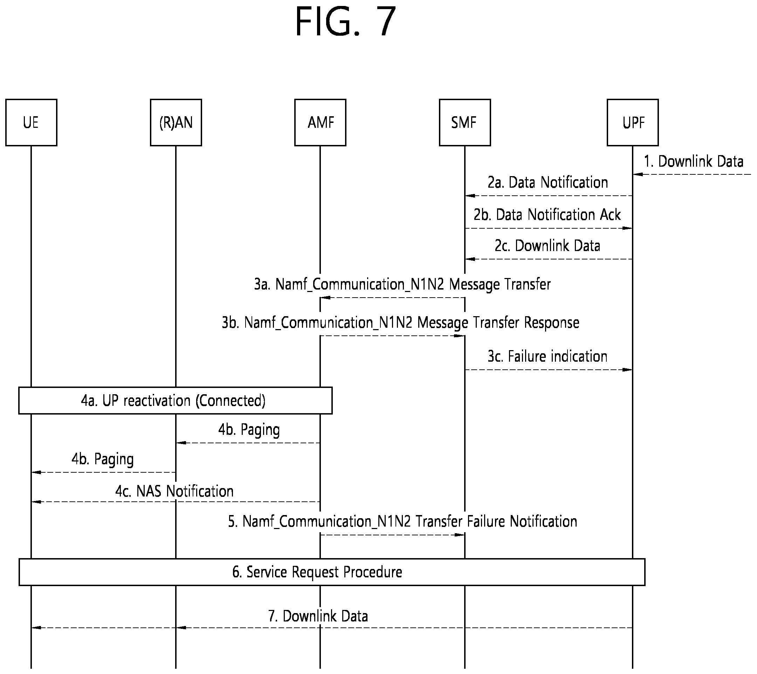

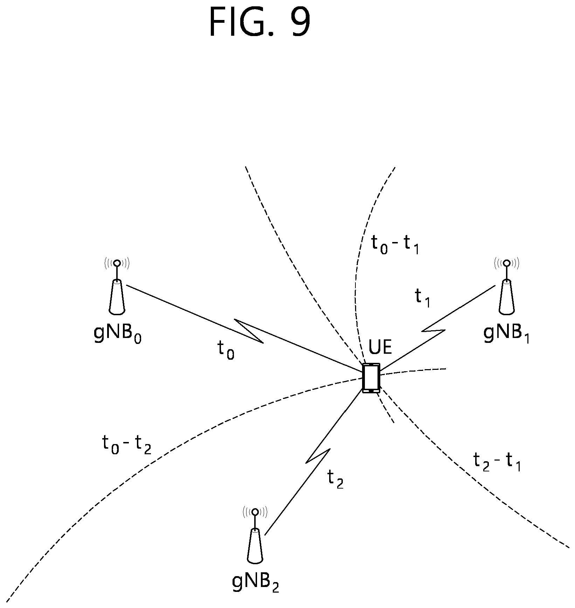

Hereinafter, an example of the UE triggered service request procedure will be described with reference to FIGS. 6a t o 6c, and an example of the network triggered service request procedure will be described with reference to FIG. 7. The servi ce request procedure described in FIGS. 6a to 6c and 9 is only an example, and the service request procedure in the present di sclosure includes all the service request procedures triggered by the UE and all the service request procedures triggered by the network.

**FIGS. 6a to 6c are signal flowcharts illustrating an exemplary UE triggered service request procedure.**

The UE in the CM-ILDE state initiates a service request procedure to transmit a response on an uplink signaling me ssage, user data, or network paging request. After receiving the service request message, the AMF may perform authenticatio n. After establishing a signaling connection for AMF, the UE or the network may transmit a signaling message (e.g., establis hment of a PDU session from the UE to the SMF through the AMF).

The service request procedure may be used by a UE in CM-CONNECTED state to request activation of a user plane connection for a PDU session and to respond to a NAS notification message received from the AMF.

For any service request procedure, if necessary, the AMF may include state information of the PDU session in a ser vice accept message to synchronize a PDU session state between the UE and the network.

If the service request is not accepted by the network, the AMF responds to the UE with a service reject message. Th e service rejection message may include an indication or a cause code for requesting that the UE perform a registration update procedure.

In the UE triggered service request procedure, both SMF and UPF belong to a PLMN that serves the UE. For exam ple, in a home routed roaming case, the SMF and UPF of the HPLMN are not affected by the service request procedure (that i s, the SMF and UPF of the HPLMN are not involved in the service request procedure).

In response to a service request according to user data, the network may take additional action if the user plane conn ection activation is not successful.

The UE triggered service request procedure may be applied to a scenario with or without an intermediate UPF and a scenario with or without an intermediate UPF reselection.

1) Signaling from UE to (R)AN: the UE may transmit an access network (AN) message (including AN parameters, s ervice request (list of PDU sessions to be activated, list of allowed PDU sessions), security parameters and PDU session statu s (status)) to the (R)AN.

2) (R)AN to AMF signaling: (R)AN may transmit an N2 message to AMF. The N2 message may include N2 param eters, a service request, and a UE context request.

3a) Signaling from AMF to (R)AN: AMF may transmit an N2 request to (R)AN. Here, the N2 request may include a security context, a handover restriction list, and a list of recommended cells/TAs/NG-RAN node identifiers.

3) If the service request is not transmitted as being integrity protected or integrity protection verification failed, the AMF may initiate a NAS authentication/security procedure.

4) [Conditional Operation] Signaling from AMF to SMF: The AMF may transmit an Nsmf_PDUSession_UpdateSM Context Request to the SMF. Here, the Nsmf_PDUSession_UpdateSMContext Request may include a PDU session ID, oper ation type, UE location information, access type, RAT type, and UE presence in LADN service area.

5) If the PDU session ID corresponds to the LADN and the SMF determines that the UE is located outside the avail able area of the LADN based on the "UE presence in the LADN service area" provided by the AMF, the SMF may determine to perform the following actions (based on a local policy).

- SMF may maintain the PDU session. However, the SMF may reject the activation of the user plane connection of the PDU session and notify the AMF accordingly. When the service request procedure is triggered by the network initiated se rvice request of FIG. 7, the SMF may notify the UPF (UPF that has sent data notification) that the UPF should discard downli nk data for the PDU session and/or should not provide an additional data notification message; or
- The SMF may release the PDU session: The SMF may release the PDU session and inform the AMF that the PDU session has been released.
- In the above two cases, the SMF responds to the AMF with an appropriate reject cause, and user plane activation o f the PDU session may be stopped.

When the SMF determines that the UE is located in the LADN available area, the SMF may check a UPF selection criterion based on the location information received from the AMF and determine to perform one of the following operations:

- The SMF accepts the activation of the UP connection and may continue to use the current UPF,
- When the UE moves outside the service area of the UPF (the UPF previously connected to the AN), the SMF, whi le maintaining the UPF acting as a PDU session anchor, may accept activation of the UP connection and select a new interme diate UPF (or may add/remove intermediate UPFs (I-UPF)). The steps to perform the addition/change/r emoval of the I-UPF a re described below through conditional steps.
- The SMF may reject activation of the UP connection of the PDU session in session and service continuity (SSC) m ode 2. In addition, after the service request procedure, the SMF may trigger re-establishment of a PDU session in order to per form allocation of a new UPF (UPF acting as a PDU session anchor). (This operation may be performed, for example, when t he UE is moved outside the service area of the anchor UPF connected to the NG-RAN)

6a) [Conditional operation] Signaling from SMF to new UPF (or new I-UPF): The SMF may transmit an N4 session establishment request to the UPF.

6b) Signaling from new UPF (or I-UPF) to the SMF: The new UPF (or I-UPF) may transmit an N2 session establishment response (N4 Session establishment response) to the SMF.

7a) [Conditional operation] Signaling from SMF to UPF (PSA: PDU session anchor) signaling: SMF may transmit a n N4 session modification request to the UPF.

7b) The UPF (PSA) may transmit an N4 session modification response message to the SMF.

When the UPF (PSA) receives the data forwarding indication, the UPF (PSA) becomes an N3 endpoint and the UPF (PSA) may transmit CN DL tunnel information for the previous UPF (or I-UPF) to the SMF. The SMF may start a timer. If t he previous I-UPF resource exists, the SMF may drive a timer to be used in step 22a in order to release the corresponding reso urce.

8a) [Conditional operation] Signaling from SMF to existing UPF (or I-UPF): The SMF may transmit N4 session mo dification (including new UPF address, new UPF DL tunnel ID) to the existing UPF (or I-UPF).

8b) Signaling from the existing UPF (or I-UPF) to the SMF: The existing UPF (or I-UPF) may transmit an N4 sessi on modification response message to the SMF.

9) [Conditional operation] Signaling from an existing UPF (or I-UPF) to a new UPF (or I-UPF): The existing UPF ( or I-UPF) may deliver downlink data buffered with a new UPF (or I-UPF).

10) [Conditional operation] Signaling from the existing UPF (or I-UPF) to the UPF (PSA): The existing UPF (or I-UPF) may transfer buffered downlink data to the UPF (PSA).

11) [Conditional Operation] Signaling from SMF to AMF: SMF may transmit Nsmf_PDUSession_UpdateSMConte xt Response to AMF. Nsmf_ PDUSession_UpdateSMContext Response may include N2 SM information (PDU session ID, Q FI(s) (QoS Flow ID), quality of service (QoS) profile, CN N3 tunnel information, S-NSSAI, user plane security enforcement, UE integrity protection maximum data rate, and a cause. When the UPF connected to the RAN is UPF (PSA), the CN N3 tun nel information is UL tunnel information of UPF (PSA). When the UPF connected to the RAN is a new I-UPF, the CN N3 tu nnel information is UL tunnel information of the I-UPF.

The SMF may reject the activation of the UP of the PDU session by including the cause in the Nsmf_PDUSession_ UpdateSMContext Response. The SMF may reject activation of the UP of the PDU session in the following cases, for examp le:

- When the PDU session corresponds to the LADN and the UE is located outside the available area of the LADN as in step 5;
- When the AMF informs the SMF that the UE is reachable only for a regulatory prioritized service and the PDU se ssion to be activated is not for the regulatory prioritized service, or
- When the SMF determines to change the PSA UPF for the requested PDU session as in step 5. In this case, after t he SMF transmits the Nsmf_PDUSession_UpdateSMContext Response, the SMF may perform another procedure to instruct t he UE to re-establish the PDU session for SSC mode 2.
- If the SMF receives a negative response in step 6b due to UPF resource unavailability.

12) Signaling from AMF to (R)AN: The AMF may transmit an N2 request to (R)AN. N2 request may include N2 S M information received from the SMF, security context, handover restriction list, subscribed UE-aggregate maximum bit rate (AMBR), MM NAS service acceptance (a list of recommended cells/TAs/NG-RAN node identifiers, and UE radio capability. Allowed NSSAI for the access type of the UE may be included in the N2 message.

13) Signaling from (R)AN to UE: The NG-RAN may perform RRC connection reconfiguration with the UE. Speci fically, the NG-RAN may perform RRC connection reconfiguration with the UE according to QoS information related to all Q oS flows of a data radio bearer and a PDU session in which the UP connection is activated. For the UE that was in the CM-ID LE state, if the service request is not triggered by the UE only for a signaling connection, user plane security may be establish ed in this step. For the UE in the CM-IDLE state, when a service request is triggered by the UE only for signaling connection , the AS security context may be established in this step.

14) [Conditional operation] Signaling from (R)AN to AMF: The (R)AN may transmit acknowledgement for N2 req uest to the AMF. For example, the (R)AN may transmit an N2 request Ack to the AMF. Here, the N2 request Ack may inclu de N2 SM information (including AN tunnel information, list of accepted QoS flows for the PDU sessions whose UP connect ions are activated and a list of rejected QoS Flows for the PDU Sessions whose UP connections are activated) and a PDU sess ion ID.

15) [Conditional operation] Signaling from AMF to SMF: The AMF may transmit an Nsmf_PDUSession_UpdateS MContext request (including N2 SM information, RAT type, and access type) per PDU session to the SMF. The AMF may d etermine the access type and the RAT type based on the global RAN node ID associated with the N2 interface.

16) [Optional action] Signaling from SMF to PCF: When dynamic PCC is distributed, SMF performs SMF initiated SM policy modification procedure to initiate notification of new location information to the PCF (if subscribed). The PCF ma y provide updated policies.

17a) [Conditional operation] Signaling from the SMF to new I-UPF: The SMF may transmit an N4 session modifica tion request to a new I-UPF. The N4 session modification request may include AN tunnel information and a list of accepted QFIs.

17b) [Conditional Operation] Signaling from UPF to SMF: The UPF may transmit an N4 session modification respo nse to the SMF.

18a) [Conditional operation] Signaling from SMF to UPF (PSA): The SMF may transmit an N4 session modificatio n request to UPF (PSA). The N4 session modification request may include AN tunnel information and a list of rejected QoS f lows.

18b) [Conditional operation] Signaling from UPF to SMF: The UPF may transmit an N4 session modification respo nse to the SMF.

19) [Conditional operation] Signaling from SMF to AMF: The SMF may transmit an Nsmf_PDUSession_UpdateS MContext response to the AMF.

20a) [Conditional operation] Signaling from SMF to new UPF (or I-UPF): The SMF may transmit an N4 session m odification request to a new UPF (or I-UPF).

20b) [Conditional operation] Signaling from new UPF (or I-UPF) to SMF: The new UPF (or I-UPF) may transmit a n N4 session modification response to the SMF.

21a) [Conditional operation] Signaling from SMF to UPF (PSA): The SMF may transmit an N4 session modificatio n request to the UPF (PSA).

21b) [Conditional operation] Signaling from UPF (PSA) to SMF: UPF (PSA) may transmit an N4 session modificat ion response to the SMF.

22a) [Conditional operation] Signaling from SMF to previous UPF: The SMF may transmit an N4 session modificat ion request or an N4 session release request to the previous UPF.

22b) Signaling from previous I-UPF to the SMF: The previous I-UPF may transmit an N4 session modification resp onse or an N4 session release response to the SMF.

**FIG. 7 is a signal flowchart illustrating an exemplary network initiated service request procedure.**

The network initiated service request procedure is used when there is a need for activating a user plane for the PDU session to transfer signaling (e.g., N1 signaling to the UE, mobile-terminated short message service (SMS)), mobile terminati ng (a destination of data is UE) user data with the UE.

When the network initiated service request procedure is triggered by a short message service function (SMSF), PCF, location management function (LMF), gateway mobile location center (GMLC), NEF or UDM, the SMF in FIG. 7 may be r eplaced by a corresponding NF. For example, when the network initiated service request procedure is triggered by the PCF, t he PCF may perform operations performed by the SMF of FIG. 7.

When the UE is in the CM-IDLE state or the CM-CONNECTED state in 3GPP access, the network initiates a netw ork service request procedure.

When the UE is in the CM-IDLE state and asynchronous type communication is not activated, the network may tran smit a paging request to the (R)AN/UE. The paging request triggers a UE initiated service request procedure in the UE. Whe n asynchronous type communication is activated, the network stores the received message, and when the UE enters the CM-C ONNECTED state, the network may transfer the received message to the (R)AN and/or the UE.

When the UE is in the CM-IDLE state in non-3GPP access and the UE is simultaneously registered for 3GPP access and non-3GPP access in one public land mobile network (PLMN), the network may initiate the network initiated service requ est procedure via 3GPP access.

When the UE is in the CM-IDLE state in 3GPP access, in the CM-CONNECTED state in non-3GPP access, and the UE is simultaneously registered for 3GPP access and non-3GPP access in one PLMN, the network may initiate the network in itiated service request procedure through 3GPP access.

In the network initiated service request procedure, both SMF and UPF belong to a PLMN serving the UE. For exam ple, in a home routed roaming case, the SMF and UPF of a HPLMN are not affected by a service request procedure (that is, th e SMF and UPF of the HPLMN are not involved in the service request procedure).

The procedure of FIG. 7 deals with a non exhaustive list of use-cases for 3GPP access as follows (detailed condition s to which each step is applied are described in the procedure below.):

- When the SMF needs to set up an N3 tunnel in order to deliver a downlink packet for a PDU session to the UE and the UE is in the CM-IDLE state: Step 3a includes an N2 message and step 4b (paging) may be performed.
- When the SMF needs to set up an N3 tunnel in order to deliver a downlink packet for a PDU session to the UE and the UE is in a CM-CONNECTED state: Step 3a includes an N2 message and step 4a (UP activation) may be performed.
- If an NF (e.g., SMF, SMSF, LMF or NEF) needs to transmit an N1 message to the UE and the UE is in the CM-ID LE state: Step 3a includes an N1 message, step 3b includes a cause "Attempting to reach UE", and step 4b (paging) occurs.

- When the NF (e.g., SMSF, PCF, or UDM) triggers the AMF to set up a NAS connection with the UE and the UE i s in the CM-IDLE state: Trigger differ according to procedures, step 4b (paging) is occurs.

1) When the UPF receives downlink data for the PDU session and AN tunnel information for the PDU session is no t stored in the UPF, the UPF may buffer the downlink data or transfer the downlink data to the SMF based on an instruction re ceived from the SMF.

2a) Signaling from the UPF to the SMF: The UPF may transmit a data notification to the SMF. The data notificatio n may include an N4 session ID, information for identifying a QoS flow for a DL data packet, and DSCP.

2b) Signaling from SMF to UPF: A data notification Ack may be transmitted.

2c) When the SMF instructs the UPF that it will buffer the data packet, the UPF may deliver the downlink data pack et to the SMF.

3a) [Conditional operation] i) Signaling from SMF to AMF: The SMF may transmit a Namf_Communication_N1N 2MessageTransfer (including SUPI, PDU session ID, N2 SM information (including QFI(s), QoS profile(s), CN N3 tunnel inf ormation, S-NSSAI, and paging policy indication), area of validity for N2 SM information, ARP (Allocation and Retention Pr iority) including paging policy indication, 5QI and N1N2TransferFailure notification target address) to the AMF. Or, ii) sign aling from NF to AMF: NF may transmit Namf_Communication_N1N2MessageTransfer (including SUPI and N1 messages) to the AMF.

3b) [Conditional operation] The AMF may respond to the SMF.

If the UE is in the CM-IDLE state for the AMF and the AMF may page the UE, the AMF may directly transmit a N amf_Communication_N1N2MessageTransfer response to the SMF with the cause "Attempting to reach UE". The cause "Att empting to reach UE" may indicate to the SMF that the N2 SM information provided in step 3a may be ignored by the AMF i f the UE is reachable and that the SMF is requested to provide the N2 SM information again.

3c) [Conditional operation] SMF may respond to UPF. For example, the SMF may transmit a failure indication to t he UPF.

The SMF may notify the UPF of a user plane setup failure.

4a) [Conditional operation] When the UE is in the CM-CONNECTED state in the access related to the PDU session ID received from the SMF in step 3a, steps 12 to 22 of FIGS. 6a to 6c may be performed without transmitting a paging messa ge to the (R)AN node and the UE to activate the user plane connection for the PDU session (e.g., radio resources and N3 tunn els may be established). In step 12 of FIGS. 6a to 6c, the AMF may not transmit a NAS service accept message to the UE. P arts other than steps 12 to 22 of FIGS. 6a to 6c may be omitted.

4b) [Conditional operation] Even when the UE is in the CM-IDLE state in 3GPP access, the PDU session ID receiv ed from the SMF in step 3a is related to the 3GPP access, and the UE is in the CM-CONNECTED state for non-3GPP access, if the AMF determines to notify the UE through 3GPP access based on the local policy, the AMF may transmit a paging mess age to the NG-RAN node through 3GPP access.

4c) [Conditional operation] When the UE is simultaneously registered for 3GPP access and non-3GPP access in the same PLMN, the UE is in the CM-CONNECTED state in 3GPP access, and the PDU session ID of step 3a is associated with t he non-3GPP access, the AMF may transmit a NAS notification message including a non-3GPP access type to the UE throug h 3GPP access and may set a notification timer. When step 4c is performed, step 5 may be omitted.

5) [Conditional operation] Signaling from AMF to SMF: The AMF may transmit a notification related to failure of Namf_Communication_N1N2Transfer to the SMF. For example, the AMF may transmit a Namf_Communication_N1N2Tra nsferFailure notification to the SMF.

6) When the UE is in the CM-IDLE state in 3GPP access and a paging request for a PDU session related to 3GPP ac cess is received, the UE may initiate the UE initiated service request procedure described in FIGS. 6a to 6c. In step 4 of FIG. 6a, the AMF may call a Nsmf_ PDUSession_UpdateSMContext request associated with a PDU session identified in the servic e request message (excluding the PDU session for the PDU session ID included in Namf_Communication_N1N2MessageTra nsfe in step 3a of FIG. 7) to the SMF. To support the transfer of buffered data, the SMF may instruct the UPF to establish a d ata transfer tunnel between the old UPF and the new UPF or PSA as described in steps 6a, 7a, and 8b of FIG. 6a.

7) The UPF may transmit buffered downlink data to the UE through the (R)AN node that has performed the service request procedure.

The network may transmit downlink signaling when a network initiated service request procedure is initiated accord ing to a request from another network described in step 3a.

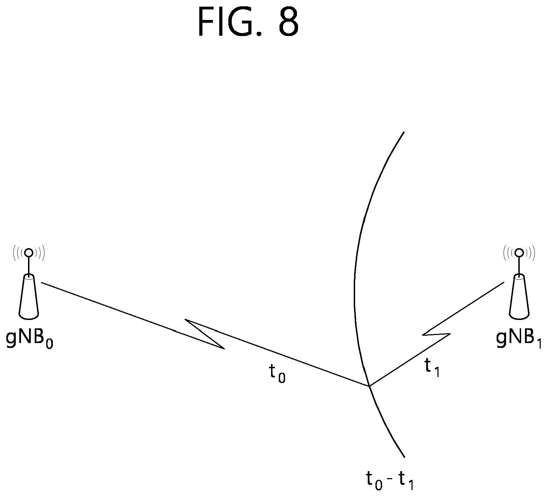

In the following, examples of positioning methods based on 5G communications will be described with reference to the examples of FIGS. 8 through 11.

In the following, five methods (i.e. DL-TDOA, UL-TDOA, Multi-cell RTT, UL-AOA, DL-AOD) are described.

The examples in Figure 8 and Figure 9 are examples of DL-TDOAs.

Based on the Positioning Reference Signal (PRS), the UE may measure the time difference between gNBs. For exa mple, gNBs may transmit PRS to the UE. Then, the UE may know when the PRS transmitted by multiple gNBs is received. F or example, an example in the case of two gNBs is shown in Figure 8.

The following drawings are intended to illustrate specific embodiments of the present disclosure. The designations o f specific devices or the designations of specific signals/messages/fields shown in the drawings are for illustrative purposes on ly, and the technical features of this specification are not limited to the specific designations used in the drawings below.

**FIG. 8 shows a first example of positioning based on DL-TDOA.**

The two gNBs (gNB0 and gNB1) shown in FIG. 8 may be synchronized. Then, if the UE knows the time difference between the two gNBs, it can draw the parabola shown in the example in FIG. 8.

An example of measuring the time difference from three gNBs is shown in FIG. 9.

The following drawings are intended to illustrate specific embodiments of the present disclosure. The designations o f specific devices or the designations of specific signals/messages/fields shown in the drawings are for illustrative purposes on ly, and the technical features of this specification are not limited to the specific designations used in the drawings below.

**FIG. 9 is a second example of positioning based on DL-TDOA.**

The UE may measure the time difference from at least three gNBs. The UE or LMF may then estimate the location of the UE, as illustrated in the example of FIG. 9. The measurement metric for positioning based on DL-TDOA may be the re ference signal time difference (RSTD). The UE may measure the RSTD. For example, the UE may measure the RSTD betwe en gNB0 and gNB1, the RSTD between gNB0 and gNB2, and the RSTD between gNB0 and gNB2. If more gNBs are present , the UE may measure more RSTD values. The LMF can manage the gNBs to participate in the DL-TDOA, and the UE can m easure the RSTD value between all gNBs. Depending on the UE capability, the UE may perform the positioning calculation o r the LMF may perform the positioning calculation. The UE capability may be, for example, UE-based or UE-assisted. UE-ba sed can mean that the UE directly performs the action of calculating the UE's position. UE-assisted may mean that the UE ass ists the LMF in calculating the UE's position.

For positioning based on UL-TDOA, the UE may transmit a sounding reference signal (SRS). The SRS transmitted by the UE may be received by multiple gNBs. The multiple gNBs may forward the time information received from the UE to the location server. Then, the location server (e.g., LMF) or the UE can calculate the time difference between the UE and each gNB and estimate the UE location.

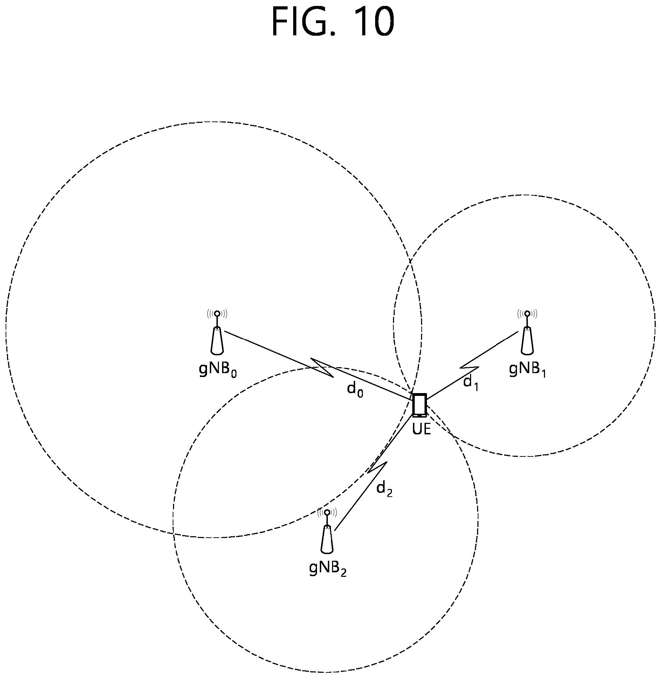

Referring to FIG. 10, an example of Multi-cell RTT is illustrated.

The following drawings are intended to illustrate specific embodiments of the present disclosure. The designations o f specific devices or the designations of specific signals/messages/fields shown in the drawings are for illustrative purposes on ly, and the technical features of this specification are not limited to the specific designations used in the drawings below.

FIG. 10 is an example of positioning based on Multi-cell RTT.

The UE measures the round trip time between the UE and the gNB by measuring the UE Rx-Tx time difference and the gNB measures the gNB Rx-Tx time difference. Unlike DL-TDOA and UL-TDOA, positioning based on multi-cell RTT h as the advantage that it is not affected by synchronization error between gNBs. However, positioning based on Multi-cell RTT requires both UL and DL resources to be used, so it may be a high overhead positioning method. The distance between the U E and the gNBs can be measured through the round trip time, and based on the distance measurement with at least three gNBs , the LMF or UE can predict the location of the UE.

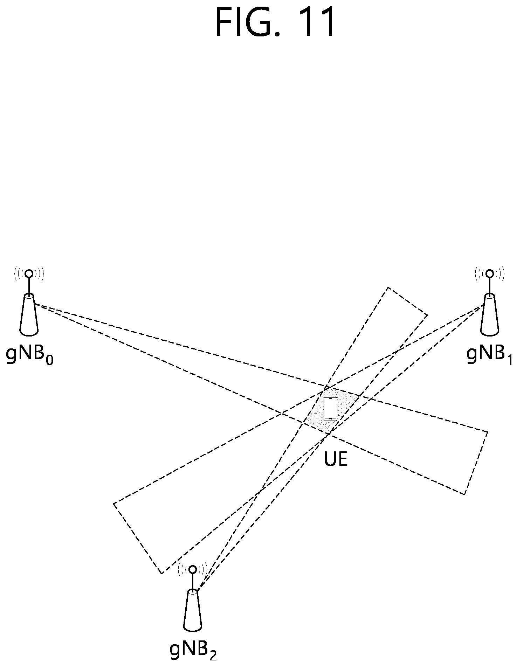

Referring to FIG. 11, positioning based on UL-AOA is illustrated.

The following drawings are intended to illustrate specific embodiments of the present disclosure. The designations o f specific devices or the designations of specific signals/messages/fields shown in the drawings are for illustrative purposes on ly, and the technical features of this specification are not limited to the specific designations used in the drawings below.

FIG. 11 is an example of positioning based on UL-AOA.

The UE transmits the SRS. The multiple gNBs may then measure the Uplink Angle of Arrival for the SRS transmitt ed by the UE. Based on the measurement results, the UE or LMF can estimate the location of the UE.

Positioning based on DL-AOD is as follows The gNB may transmit a reference signal. Then, by measuring the refer ence signal transmitted by the gNB, the UE may find the downlink Angle of Departure. Based on the downlink angle of depar ture, the UE can estimate the location of the UE.

Time alignment error (TAE) is explained.

The requirements related to TAE can be applied to frame timing in MIMO transmission, carrier aggregation, and co mbinations of these.

The frames of the NR signals present in the Base Station (BS) transmitter antenna connector or Transceiver Array B oundary (TAB) connector may not be perfectly aligned in time. The RF signals present in the BS transmitter antenna connect or or transceiver array boundary may have a certain timing difference with respect to each other.

The TAE can be specified for a specific set of signal/transmitter configuration/transmission mode.

In the case of BS type 1-C, the TAE can be defined as the largest timing difference between two signals belonging t o different antenna connectors for a specific set of signal/transmitter configuration/transmission mode.

For BS type 1-H, TAE is defined as the largest timing difference between two signals belonging to TAB connectors belonging to different transmitter groups at the transceiver array boundary. Here, the transmitter group is associated with the T AB connector within the transceiver unit array corresponding to carrier aggregation, MIMO transmission, for a specific set of signal/transmitter settings/transmission modes.

The minimum requirements for BS Type 1-C and BS Type 1-H are described.

For MIMO transmission, the TAE shall not exceed 65ns at each carrier frequency.

For in-band continuous carrier aggregation (with or without MIMO), the TAE shall not exceed 260 ns.

For in-band discrete carrier aggregation (with or without MIMO), the TAE should not exceed 3 $\mu$s.

For inter-band carrier aggregation, the TAE should not exceed 3 $\mu$s.

The TAE requirements for NB-IoT are specified in TS 36.104 V17.7.0 clause 6.5.3.

The present disclosure describes various examples of methods for improving the accuracy of NR-based positioning. For example, bandwidth aggregation techniques may be used for NR-based positioning. For example, in various examples of t he present disclosure, bandwidth aggregation may be performed based on a timing error group (TEG). For example, based on information related to TEG, such as Rx TEG capability of the UE and Tx TEG capability of the UE, it can be determined whe ther bandwidth aggregation will be performed. The following examples illustrate how to improve the accuracy of positioning based on bandwidth aggregation, based on various examples.

The various examples in this specification describe various examples of using bandwidth aggregation techniques to improve NR-based positioning accuracy. For example, the decision to apply bandwidth aggregation techniques may be based on one or more of the Tx TEG of TRP, Tx TEG of UE, and Rx TEG capacities. This prevents performance degradation due to timing alignment error (TAE) between carriers. In addition, positioning performance can also be improved by applying bandw idth aggregation only in situations where it is suitable.

The bandwidth aggregation technique is one of the positioning enhancement methods considered in 3GPP TS Rel.1 8. The bandwidth aggregation technique is a method that can increase positioning accuracy through bandwidth expansion.

In FR1, a single carrier can have a bandwidth of up to 100 MHz. In FR2, a single carrier can have a bandwidth of up to 400 MHz. When bandwidth aggregation is applied, up to three carrier components can be configured. When positioning ba sed on bandwidth aggregation is used, the accuracy can be improved compared to positioning based on single carriers. Howev er, if there is a timing alignment error between carriers, the accuracy may decrease rather than increase compared to single car rier positioning.

For example, applying bandwidth aggregation can improve positioning accuracy. However, when bandwidth aggreg ation is applied, there is a problem of performance degradation due to timing alignment error (TAE) by carrier.

For example, if the bandwidth aggregation technique is applied, the performance gain decreases as the TAE value in creases. If the bandwidth aggregation technique is applied, the positioning performance deteriorates when the TAE value exce eds a certain level, compared to when a single carrier is used.

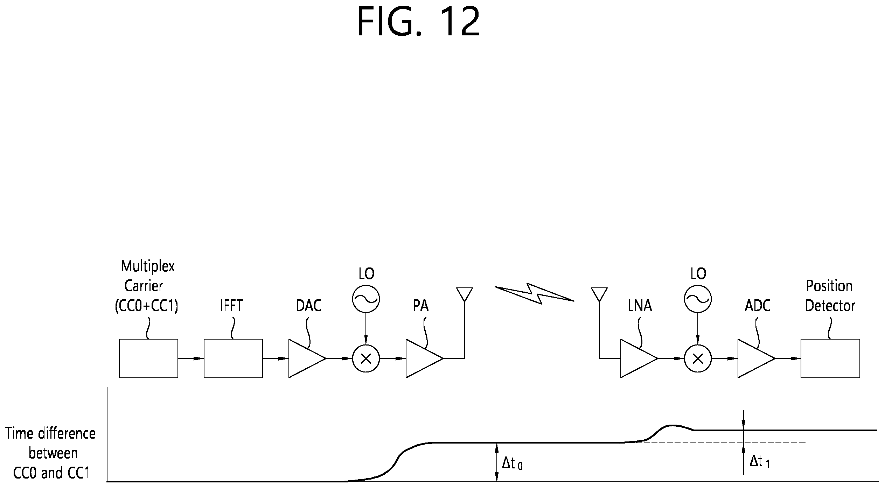

Therefore, to minimize the TAE value, a single RF architecture may be suitable as an RF architecture. For example, bandwidth aggregation positioning may be supported only in a single RF architecture. However, even with a single RF archite cture, TAE due to group delay in the analog domain can occur. Depending on the level of TAE, the bandwidth aggregation m ethod may result in performance gains in positioning or performance degradation compared to using a single carrier. Referrin g to the example in Figure 12, the example of TAE due to group delay and group delay in the analog domain is explained in a single RF structure.

The following drawings are provided to illustrate specific examples of this specification. The names of specific devi ces or specific signals/messages/fields shown in the drawings are provided as examples, and the technical features of this spec ification are not limited to the specific names used in the following drawings.

**FIG. 12 illustrates an example of a TAE according to a single RF structure in one embodiment of the present disclosure.**

The example in Figure 12 is an example of a TAE occurring in a single RF structure.

Referring to the example in Figure 12, bandwidth aggregation can be applied based on Component Carrier (CC) 0 a nd CC1. In the example in FIG. 12, IFFT is Inverse Fast Fourier Transform. DAC is digital to analog converter. PA is power a mplifier, and LO is local oscillator. LNA is low noise preamplifier. ADC is analog to digital converter. The Position Detector may be a module that performs measurement operations on positioning measurement items. The positioning measurement ite ms may refer to the positioning measurement items described in the various examples in the present disclosure, such as RSTD , UL-RTOA, UE Rx-Tx Time difference, and gNB Rx-Tx time difference.

The RF structure on the left side of FIG. 12 can be an example of the RF structure of the transmission end. The RF s tructure on the right side of FIG. 12 can be an example of the RF structure of the receiving end. It can be the transmission end where the UE or the BS transmits signals. In this case, a time difference $\Delta t_0$ between CC0 and CC1 can occur in the RF struct ure of the transmission end due to an analog module such as a PA. It can also be a UE or BS receiving the signal. In this case, a time difference $\Delta t_1$ between CC0 and CC1 can occur in the analog module, such as an LNA, within the RF structure of the r eceiving end. Therefore, the TAE can be $\Delta t_0 + \Delta t_1$. For reference, the RF structure of the transmitting end may be the RF struc ture of the BS transmitting the PRS, and the RF structure of the receiving end may be the RF structure of the UE. The TAE va lue may exist for each of the transmitting end and the receiving end. Since the positioning performance varies depending on t he integrated TAE performance, TAE can mean the sum of the two values ($\Delta t_0 + \Delta t_1$). In addition, $\Delta t0$ and $\Delta t1$ can occur mai nly in analog devices. For example, $\Delta t0$ and $\Delta t1$ can occur in the PA and LNA. For example, $\Delta t0$ can occur in the back end of the DAC, and $\Delta t1$ can occur in the front end of the ADC.

TAE due to group delay can occur in analog modules such as PA and LNA. Depending on the level of TAE, TAE c an affect the UE Rx TEG, UE Tx TEG, and UE RxTxTEG values, which are UE capabilities.

Hereinafter, a specific example of TEG is explained by referring to TEG-TimingErrorMargin of the LTE positionin g protocol of 3GPP TS 37.355 V17.2.0.

TRP Tx Timing Error Group (TRP Tx TEG): TRP Tx TEG can be a Tx timing error related to the TRP transmission from one or more DL-Positioning Reference Signal (PRS) resources. The Tx timing error is within a specific margin range.

UE Rx Timing Error Group (UE Rx TEG): The UE Rx TEG may be an Rx timing error related to the UE reporting one or more DL measurements within a specific margin. The Rx timing error is within a specific margin range.

UE RxTx Timing Error Group (UE RxTx TEG): The UE RxTx TEG can be the Rx timing error and Tx timing error related to the UE reporting of one or more UE Rx-Tx time differences. The UE RxTx TEG can have a difference of 'Rx timin g error + Tx timing error' within a certain margin.

UE Tx Timing Error Group (UE Tx TEG): The UE Tx TEG can be a Tx timing error related to the UE transmission on one or more UL SRS resources for positioning purposes. The Tx timing error is within a certain margin.

The ranges of the values of the TRP Tx TEG, UE Rx TEG, and UE Tx TEG described above are as shown in the fol lowing example.

For example, the values of UE Rx TEGs, UE Tx TEGs, and TRP Tx TEGs can be defined as TEG-TimingErrorMar gin. For example, TEG-TimingErrorMargin-r17:: = ENUMERATING {tc0, tc2, tc4, tc6, tc8, tc12, tc16, tc20, tc24, tc32, tc40 , tc48, tc56, tc64, tc72, tc80}. Here, it can be understood as tc0= 0*Tc, tc2=2*Tc, ..., tc80=80*Tc. Tc can be, for example, 0.5 09 ns. Tc can be Tc=1/($\Delta f_{max}$*$N_f$). $\Delta f_{max}$ can be 480*10^3 Hz, and $N_f$=4096.

For example, the UE RxTx TEG value can be defined as UE RxTxTEG-TimingErrorMargin. For example, RxTxTE G-TimingErrorMargin:: = ENUMERATING {tc0-5, tc1, tc2, tc4, tc8, tc12, tc16, tc20, tc24, tc32, tc40, tc48, tc64, tc80, tc96, tc128}. Here, it can be understood as tc0-5= 0.5*Tc, tc1=1*Tc, ..., tc128=128*Tc.

Positioning based on bandwidth aggregation can also be used in positioning techniques such as the following examp le. For example, positioning based on bandwidth aggregation can be used in timing-related positioning techniques among con ventional single-carrier positioning techniques. As explained earlier, there are five positioning techniques defined by NR, for example, DL-TDOA, UL-TDOA, Multi-cell RTT, UL-AoA, and DL-AoD. For example, the five methods shown in the exam ple below can be used to perform positioning based on bandwidth aggregation.

- DL-TDOA (DownLink - Time Difference Of Arrival)
- UL-TDOA (UpLink - Time Difference Of Arrival)
- Multi-cell RTT (Multi-cell Round Trip Time)
- UL-AoA (UpLink-Angle Of Arrival)
- DL-AoD (DownLink-Angle Of Departure)

Among these five, the positioning techniques related to timing are DL-TDOA, UL-TDOA, and Multi-cell RTT. Pos itioning based on bandwidth aggregation can be used for DL-TDOA, UL-TDOA, and Multi-cell RTT. The detailed behavior o f the above five methods has been previously described with reference to FIGS. 8 through 11. For each positioning method, th e metric measured by the UE or gNB may be different. The metric measured by the UE or gNB may refer to, for example, a p arameter that is used as a result of the measurement. For example, as shown in the example below, various metrics may be us ed, such as DL RSTD UL RTOA UE Rx-Tx time difference gNB Rx-Tx time difference UL AoA (UL Angle of Arrival) DL PRS-RSRPP (DL PRS reference signal received path power), etc.

For reference, the specific description of these metrics can be found in 3GPP TS38.215 17.1.0.

Describe an example of DL-TDOA (DownLink - Time Difference Of Arrival).

An example of DL-TDOA is DL RSTD (DownLink Reference Signal Time Difference).

DL reference signal time difference (DL RSTD) is the DL relative timing difference between Transmission Point (T P) j and reference TP i, defined as $T_{SubframeRxj} - T_{SubframeRxi}$,

Where:

$T_{SubframeRxj}$ is the time at which the UE receives the start of one subframe from TP j.
$T_{SubframeRxi}$ is the time at which the UE receives the corresponding start of one subframe from TP i, which is tempora lly closest to the subframe received from TP j.

Multiple DL PRS resources can be used to determine the start of one subframe in a TP.

For FR 1, the reference point of the DL RSTD is the antenna connector of the UE. For FR 2, the reference point of the DL RSTD is the UE's antenna.

DL RSTD is applicable to RRC_CONNECTED state and RRC_INACTIVE state.

Describe an example of UL-TDOA (UpLink - Time Difference Of Arrival).

One example of UL-TDOA is UL RTOA (UpLink Relative Time Of Arrival) ($T_{UL-RTOA}$).

UL RTOA ($T_{UL-RTOA}$) may be based on the start of the subframe i containing the SRS received at Reception Point ( RP) j based on the RTOA reference time.

The UL RTOA reference time is defined as $T_0 + t_{SRS}$.

- $T_0$ is the nominal beginning time of SFN 0, provided by the SFN Initialization Time.
- $t_{SRS} = (10n_f + n_{sf})* 10^{-3}$, where nf and nsf are the system frame number and the subframe number of the SRS, respectively.

Multiple SRS resources may be used to determine the start of one subframe containing the SRS received from the R P.

Reference points for $T_{UL-RTOA}$ are as the following:

- For a type 1-C base station: The receive antenna connector,
- For a type 1-O or 2-O base station: the receive antenna (e.g., the center location of the Rx antenna's radiation area) ,
- For a type 1-H base station: the Rx transceiver array boundary connector.

An example of Multi-cell Round Trip Time (RTT) is described.

An example of a multi-cell RTT is the UE Rx-Tx time difference.

The UE Rx - Tx time difference is defined as $T_{UE-RX} - T_{UE-TX}$.

Where:

$T_{UE-RX}$ is the timing of the UE receiving downlink subframe #i from the TP, defined by the first detected path in tim e.
$T_{UE-TX}$ is the timing of the UE transmission of uplink subframe #j in the time zone closest to subframe #i received fr om the TP.

Depending on the instructions from higher layers, multiple DL PRSs or CSI-RSs for resource tracking may be used to determine the start of one subframe of the first arrival path of the TP.

For FR 1, the reference point for $T_{UE-RX}$ measurement is the Rx antenna connector of the UE and the reference point for $T_{UE-TX}$ measurement is the Tx antenna connector of the UE. For FR 2, the reference point for $T_{UE-RX}$ measurement is the U E's Rx antenna and the reference point for TUE-TX measurement is the UE's Tx antenna.

UE Rx-Tx time difference is applicable for RRC _CONNECTED state and RRC _INACTIVE state.

Describe an example of gNB Rx-Tx time difference.

The gNB Rx - Tx time difference is defined as $T_{gNB-RX} - T_{gNB-TX}$.

Where:

$T_{gNB-RX}$ is the timing received at the Transmission and Reception Point (TRP) of the uplink subframe #i including th e SRS related to the UE, defined by the first detected path in time.
$T_{gNB-TX}$ is the TRP transmission timing of the downlink subframe #j in the time zone closest to the subframe #i recei ved from the UE.

Multiple SRS resources can be used to determine the start of one subframe containing SRS.

The reference points for $T_{gNB-RX}$ are as follows

- For type 1-C base stations: Receiving antenna connector,
- For a type 1-0 or 2-0 base station: The receiving antenna (for example, the center location of the Rx antenna's radi ation area),
- for a type 1-H base station: the Rx transceiver array boundary connector.

The reference points for $T_{gNB-TX}$ are as follow:s

- For a type 1-C base station: the Tx antenna connector,
- For a type 1-0 or 2-0 base station: the Tx antenna (e.g., the center location of the Tx antenna's radiation area),
- for a type 1-H base station: the Tx transceiver array boundary connector.

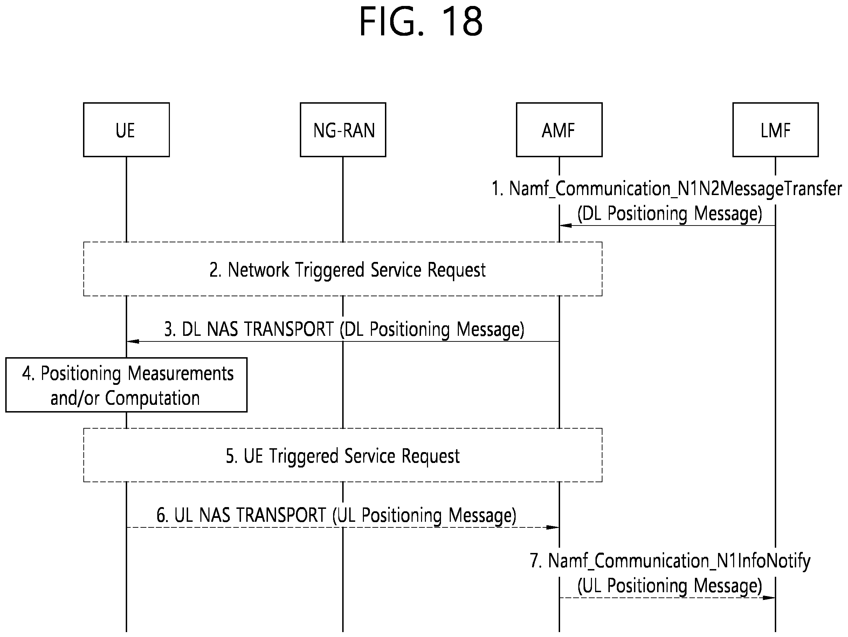

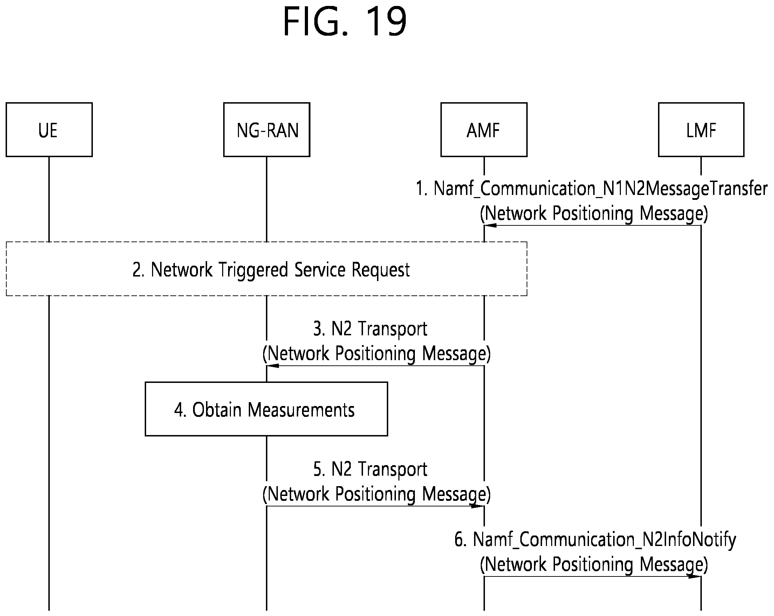

For reference, the positioning procedures according to various embodiments of the present specification may includ e, for example, a UE assisted and UE based positioning procedure (e.g., see FIG. 18) and a network assisted positioning proce dure (e.g., see FIG. 19).

The UE assisted and UE based positioning procedure may include, for example, operations by the UE to measure po sitioning related metrics and report them to the LMF. Examples of specific methods for performing the positioning related to t he UE assisted and UE based positioning procedure include DL-TDOA and DL-AoD. Multi-cell RTT may also be used. In th e case of multi-cell RTT, the UE may measure the UE Rx-Tx time difference and the NG-RAN may measure the gNB Rx-Tx time difference. The LMF or UE can use the two metrics (e.g., UE Rx-Tx time difference and gNB Rx-Tx time difference) to calculate the round trip time (RTT) between the UE and the gNB and calculate the distance based on the RTT to estimate the positioning of the UE.

The network assisted positioning procedure may include, for example, a positioning method that predicts a positioni ng based on a metric measured by the network. For example, UL-TDOA, and UL-AoA may be included.

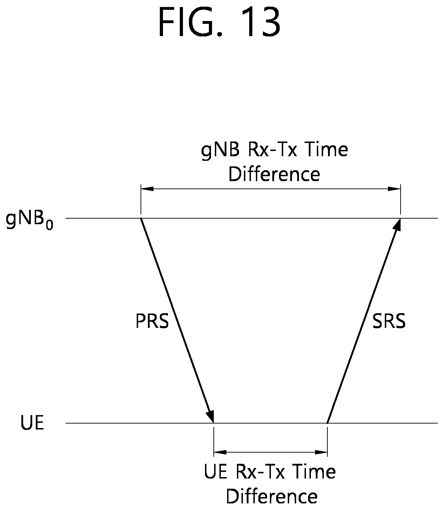

Hereinafter, with reference to FIGS. 13 through 15, an example of a multi-cell RTT will be described in detail as fol lows.

The following drawings are intended to illustrate specific embodiments of the present disclosure. The designations o f specific devices or the designations of specific signals/messages/fields shown in the drawings are for illustrative purposes on ly, and the technical features of this specification are not limited to the specific designations used in the drawings below.

**FIG. 13 illustrates an example of measuring a time difference according to one embodiment of the present dis closure.**

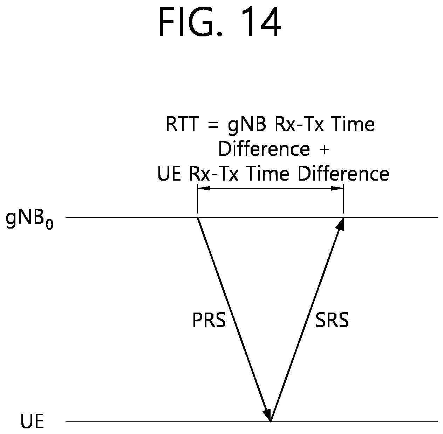

**FIG. 14 illustrates an example of calculating an RTT, according to one embodiment of the present disclosure.**

The LMF may trigger the multi-cell RTT positioning procedure to the UE and the NG-RAN (gNB or ng-eNB) via t he Access and Mobility Management Function (AMF). Multiple NG-RANs may transmit PRS to the UE in a promised (or sc heduled) slot. The UE may also transmit SRS in a committed (or scheduled) slot.

The process of calculating the distance between the gNB0 and the UE may be performed by measuring the time diff erence according to the example of FIG. 13 and then calculating the RTT according to the example of FIG. 14.

Referring to the example in Figure 13, $gNB_0$ sends a PRS to the UE. The UE transmits an SRS to the $gNB_0$. The UE calculates the UE Rx-Tx Time difference metric, which is the reception time of the PRS received from $gNB_0$ minus the trans mission time of the SRS sent. The $gNB_0$ calculates the gNB Rx-Tx Time difference metric, which is the reception time of the SRS received from the UE minus the transmission time of the PRS sent.

The LMF or UE can then calculate the RTT between $gNB_0$ and the UE, as shown in the example in FIG. 14. RTT= gNB Rx-Tx Time difference + UE Rx-Tx Time difference. Here, gNB Rx-Tx Time difference may mean the time when the g NB transmitted the PRS minus the time when the gNB received the SRS. UE Rx-Tx Time difference may mean the time whe n the UE transmitted the SRS minus the time when the UE received the PRS.

The distance between the $gNB_0$ and the UE can be calculated based on the RTT between the gNB0 and the UE, as s hown below.

$$Distance = \frac{RTT \times c}{2}, c \approx 3 \times 10^8 m/s$$

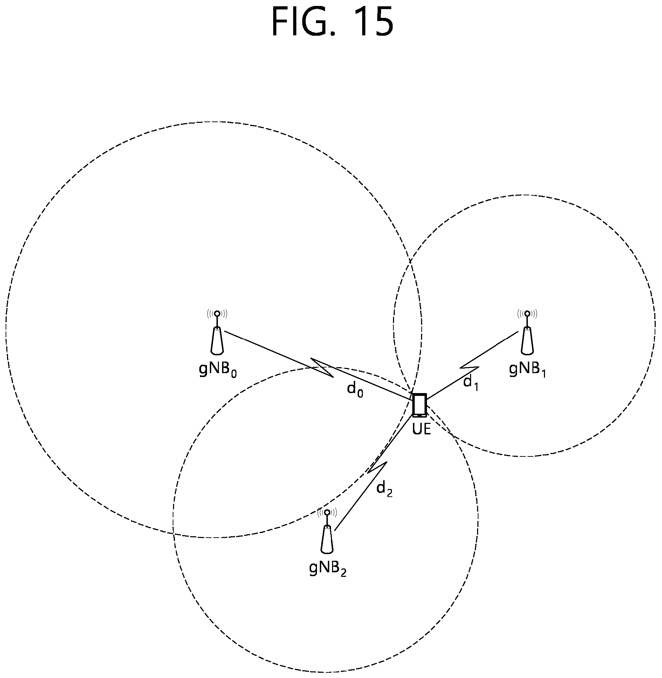

Once the distance to the UE has been calculated for all gNBs participating in the multi-cell RTT, the UE's position c an be estimated, as shown in the example in Figure 15.

The following drawings are intended to illustrate specific embodiments of the present disclosure. The designations o f specific devices or the designations of specific signals/messages/fields shown in the drawings are for illustrative purposes on ly, and the technical features of this specification are not limited to the specific designations used in the drawings below.

**FIG. 15 illustrates an example of multi-cell RTT positioning according to one embodiment of the present disc losure.**

Referring to the example of FIG. 15, the RTT between gNB0, gNB1, gNB2 and the UE can be determined accordin g to the examples of FIGS. 13 and 14, and the positioning of the UE can be estimated.

For example, let the RTT between $gNB_0$ and the UE be $RTT_0$, the RTT between $gNB_1$ and the UE be $RTT_1$, and the RTT between $gNB_2$ and the UE be $RTT_2$. Then, the distance $d_0$ between $gNB_0$ and the UE, the distance $d_1$ between $gNB_1$ and the UE, and the distance $d_2$ between $gNB_2$ and the UE can be calculated as follows.

$$d_0 = \frac{RTT_0 \times c}{2}$$

$$d_1 = \frac{RTT_1 \times c}{2}$$

$$d_2 = \frac{RTT_2 \times c}{2}$$

Then, as shown in the example in Fig. 15, the intersection of the circles centered on the location of each gNB (circle s with radius d0, d1, and d2, respectively) is the location of the UE.

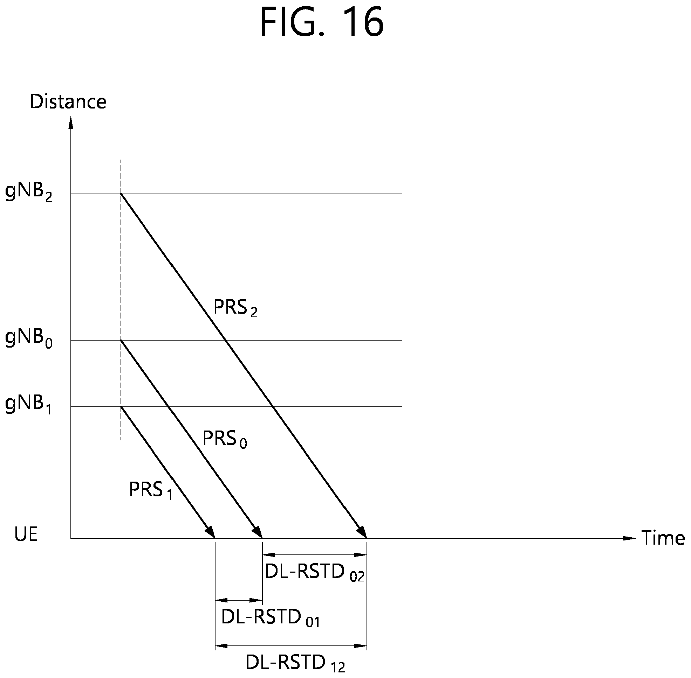

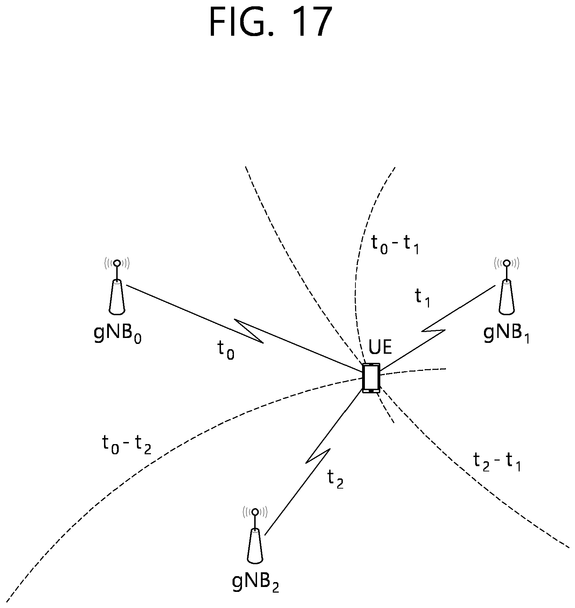

In the following, with reference to FIGS. 16 and 17, an example DL-TDOA is described in detail as follows.

The following drawings are intended to illustrate specific embodiments of the present disclosure. The designations o f specific devices or the designations of specific signals/messages/fields shown in the drawings are for illustrative purposes on ly, and the technical features of this specification are not limited to the specific designations used in the drawings below.

**FIG. 16 illustrates an example of measuring DL-RSTD according to one embodiment of the present disclosur** e.

**FIG. 17 illustrates an example of performing DL-TDOA positioning, according to one embodiment of the pre sent disclosure.**

Describe an example of DL-TDOA. In DL-TDOA, unlike Multi-cell RTT, we can measure the DL-RSTD, which is the time difference of the received PRS between two cells. Then, based on the DL-RSTD, a curve can be plotted centered on t he positions of the two cells. By utilizing at least three cells, the UE or LMF can estimate the UE's position based on the DL-RSTD.

For example, referring to the example in FIG. 16, $gNB_0$ may transmit $PRS_0$ to the UE. $gNB_1$ may transmit $PRS_1$ to t he UE. $gNB_2$ may transmit $PRS_2$ to the UE. The UE may calculate $DL\text{-}RSTD_{01}$, which is the difference between the reception timing of $PRS_0$ and $PRS_1$, the UE may calculate $DL\text{-}RSTD_{12}$, which is the difference between the reception timing of $PRS_1$ an d $PRS_2$, and the UE may calculate $DL\text{-}RSTD_{02}$, which is the difference between the reception timing of $PRS_0$ and $PRS_2$.

Referring to FIG. 17, a curve corresponding to $DL\text{-}RSTD_{01}$ (corresponding to $t_0\text{-}t_1$ in FIG. 17) centered on the two c ells $gNB_0$ and $gNB_1$ can be plotted. A curve corresponding to $DL\text{-}RSTD_{12}$ (corresponding to $t_2\text{-}t_1$ in FIG. 17) centered on the t wo cells $gNB_1$ and $gNB_2$ can be drawn. A curve corresponding to $DL\text{-}RSTD_{02}$ (corresponding to $t_0\text{-}t_2$ in FIG. 17) centered on the two cells $gNB_0$ and $gNB_2$ can be drawn. The point of intersection of the three curves can be estimated as the location of th e UE.

In the following, an example of a UE assisted and UE based positioning procedure will be described with reference to the example of FIG. 18.

The following drawings are intended to illustrate specific embodiments of the present disclosure. The designations o f specific devices or the designations of specific signals/messages/fields shown in the drawings are for illustrative purposes on ly, and the technical features of this specification are not limited to the specific designations used in the drawings below.

**FIG. 18 is an example of a UE-assisted and UE-based positioning procedure, according to one embodiment of the present disclosure.**

1. the LMF may send a message to the AMF requesting to transmit DL positioning messages to the UE. For exampl e, the LMF may request the AMF to send a downlink (DL) positioning message to the UE by invoking the Namf_Communica tion_N1N2MessageTransfer service operation. This service operation contains the DL positioning message. The Session ID p arameter of the Namf_Communication_N1N2MessageTransfer service operation is set to the LoCation Services (LCS) Correl ation identifier. The downlink positioning message may request location information from the UE, provide support data to the UE, or provide a query to the UE capability if the UE positioning capability is not received from the AMF.

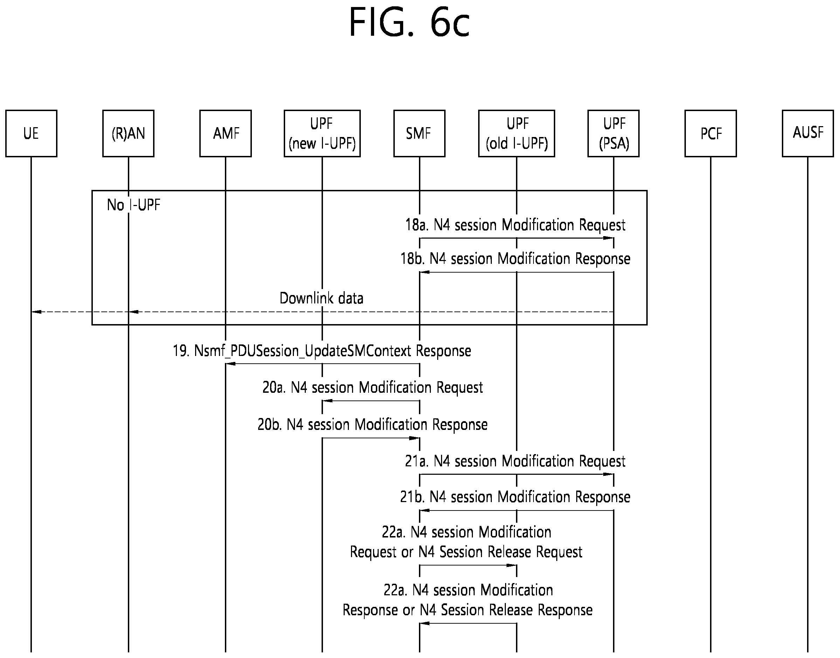

2. if the UE is in CM IDLE state, the AMF may initiate a network triggered service request procedure (e.g., see FIG . 6a to FIG. 6c) to establish a signaling connection with the UE.

3. the AMF forwards the downlink positioning message in a DL NAS TRANSPORT message to the UE. The AMF includes a routing identifier in the DL NAS TRANSPORT message, which is set to the LCS Correlation identifier. The downl ink positioning message may request a response from the network (e.g., it may request the UE to acknowledge the downlink p ositioning message, return location information, or return capabilities).

4. the UE may store all supporting data provided in the downlink positioning message, and the UE may perform the position measurements and/or position calculations requested by the downlink positioning message.

5. during step 4, the UE may need to enter the CM-IDLE state to respond to the request received in step 3. In this case, the UE may initiate a UE-triggered service request (e.g., see FIG. 7) to establish a signaling connection with the AMF.

6. [Conditional operation] The UE sends the uplink positioning message contained in the NAS TRANSPORT message to the AMF. For example, to acknowledge the downlink positioning message, to reply with the location information obtained in step 4, or to reply with any capability as requested in step 3, the UE may send the uplink positioning message contained in the NAS TRANSPORT message to the AMF. When the UE sends the uplink positioning message in a NAS TRANSPORT message, the UE shall also include the routing identifier received in step 3 in the UL NAS TRANSPORT message.

7. [Conditional behavior] The AMF may invoke the Namf_Communication_N1MessageNotify service operation towards the LMF indicated by the routing identifier received in step 6. This service operation includes the uplink positioning message received in step 6 and the LCS correlation identifier. Step 6 and step 6 may be repeated if the UE needs to send multiple uplink positioning messages to respond to the request received in step 3. Steps 1 through 7 may be repeated to transmit new support data and to request additional location information and additional UE capabilities.

The following drawings are intended to illustrate specific embodiments of the present disclosure. The designations of specific devices or the designations of specific signals/messages/fields shown in the drawings are for illustrative purposes only, and the technical features of this specification are not limited to the specific designations used in the drawings below.

**FIG. 19 is an example of a network-assisted positioning procedure according to one embodiment of the present disclosure.**

1. to request the serving NG-RAN node (gNB or ng-eNB) to transmit a network positioning message to the UE, the LMF may invoke the Namf_Communication_N1N2MessageTransfer service operation towards the AMF. The service operation may include a network positioning message and indicate whether positioning has been initiated for the PRU and LCS correlation identifiers. The network positioning message may request location information related to the UE from the NG-RAN and may include a UE unaware indication if the LMF receives the network positioning message from the AMF.

2. if the UE is in CM IDLE state, the AMF may initiate a network triggered service request procedure to establish a signaling connection with the UE. If positioning towards a Positioning Reference Unit (PRU) was indicated in step 1, the AMF shall verify that the UE is a valid PRU before initiating the procedure.

3. the AMF forwards the network positioning message within the N2 transport message to the serving NG-RAN node. The AMF includes a routing identifier (e.g., the global address of the LMF) in the N2 transport message that identifies the LMF.

4. The serving NG-RAN node can obtain the location information of the UE requested in step 3.
If a UE not recognized indication is received in a network positioning message, and the UE is in RRC_INACTIVE state, the NG-RAN rejects the network positioning message with an appropriate rejection reason (e.g., UE cannot be paged).

5. The serving NG-RAN node replies to the AMF with the network positioning message inlcuded in the N2 transport message with all the location information obtained in step 4. The serving NG-RAN node shall also include the routing identifier in the N2 transport message received in step 3.

6. The AMF invokes the Namf_Communication_N2InfoNotify service towards the LMF indicated by the routing identifier received in step 5. This service operation includes the network positioning message and the LCS correlation identifier received in step 5. To request additional location information and additional NG-RAN capabilities, steps 1 through 6 may be repeated.

The LMF can control the procedure for positioning. The LMF can determine the positioning method. And the LMF can perform scheduling related to positioning for the UE and gNB participating in positioning.

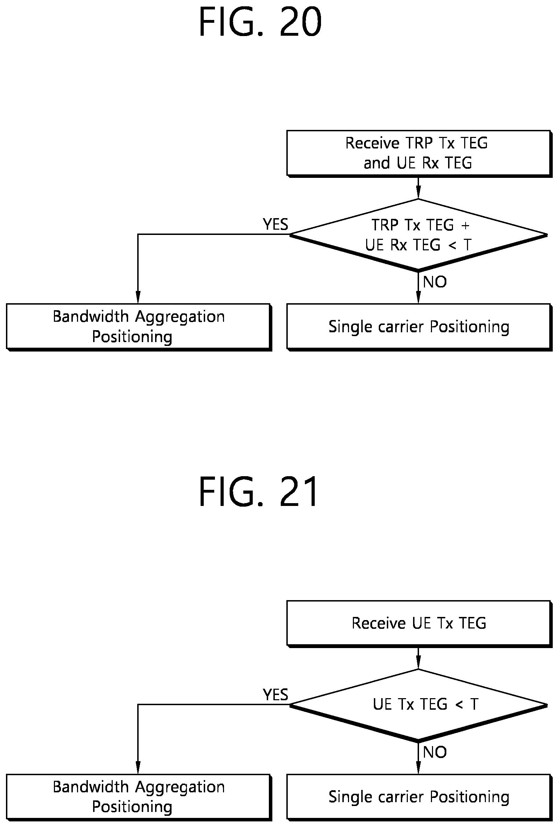

The LMF may know in advance information related to the TEG of the UE and gNB participating in the positioning in order to determine the positioning method. If the LMF does not have TEG information of the UE and/or gNB, it may have to use the single carrier positioning technique. If the LMF knows the TEG information of the UE and/or gNB, it can perform actions such as the flowchart shown in the examples in FIGS. 20 to 22 below. Based on the TEG information, the LMF can determine whether to use bandwidth aggregation positioning.

The following drawings are provided to illustrate specific examples of this specification. The names of specific devices or specific signals/messages/fields shown in the drawings are provided as examples, and the technical features of this specification are not limited to the specific names used in the following drawings.

**FIG. 20 shows an example of the operation performed by LMF when DL-TDOA is used in one embodiment of the present disclosure.**

The example of FIG. 20 is an example of when the LMF performs positioning based on a DL-TDOA (see, e.g., the example of FIGS. 8 and 9, the example of FIG. 17, etc.).

The LMF may receive a TRP Tx TEG and a UE Rx TEG. The LMF may receive a TRP Tx TEG from the base station. The LMF may receive a UE Rx TEG from the UE. For example, the LMF may receive, from the base station, a UE Rx TEG transmitted by the UE.

The LMF may determine whether the sum of the TRP Tx TEG and the UE Rx TEG is less than T.

If the sum of the TRP Tx TEG and the UE Rx TEG is less than T, the LMF may perform bandwidth aggregation positioning based on the DL-TDOA.

If the sum of TRP Tx TEG and UE Rx TEG is greater than or equal to T, the LMF may perform single carrier positioning based on DL-TDOA.

The following drawings are provided to illustrate specific examples of this specification. The names of specific devices or specific signals/messages/fields shown in the drawings are provided as examples, and the technical features of this specification are not limited to the specific names used in the following drawings.

**FIG. 21 shows an example of the operation performed by LMF when UL-TDOA is used in one embodiment of the present disclosure.**

In the example of FIG. 21, the LMF performs positioning based on the UL-TDOA.

The LMF may receive a UE Tx TEG. The LMF may receive the UE Tx TEG from the UE. For example, the LMF may receive, from the base station, a UE Tx TEG transmitted by the UE.

The LMF may determine whether the UE Tx TEG is less than T.

If the UE Tx TEG is less than T, the LMF may perform bandwidth aggregation positioning based on the DL-TDOA

If the UE Tx TEG is greater than or equal to T, the LMF may perform single carrier positioning based on the DL-TDOA.

The following drawings are provided to illustrate specific examples of this specification. The names of specific devices or specific signals/messages/fields shown in the drawings are provided as examples, and the technical features of this specification are not limited to the specific names used in the following drawings.

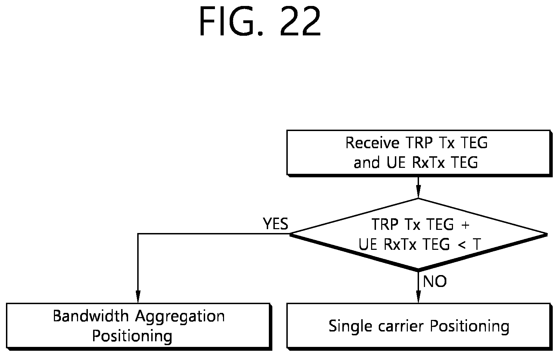

**FIG. 22 shows an example of the operation performed by LMF when Multi-cell RTT is used in one embodiment of the present disclosure.**

The example of FIG. 22 is an example of when the LMF performs positioning based on multi-cell RTT (see, e.g., examples of FIG. 10, FIG. 13, FIG. 14, etc.).

The LMF may receive a TRP Tx TEG and a UE TxRx TEG. The LMF may receive a TRP Tx TEG from the base station. The LMF may receive UE TxRx TEGs from the UE. For example, the LMF may receive, from the base station, a UE TxRx TEG transmitted by the UE.

The LMF may determine whether the sum of the TRP Tx TEG and the UE TxRx TEG is less than T.

If the sum of the TRP Tx TEG and UE TxRx TEG is less than T, the LMF may perform bandwidth aggregation positioning based on DL-TDOA.

If the sum of TRP Tx TEG and UE TxRx TEG is greater than or equal to T, the LMF may perform single carrier positioning based on DL-TDOA.

Of note, in the examples of FIGS. 20 to 22, T may be a threshold value for determining whether the LMF performs positioning based on bandwidth aggregation. Of note, in the examples of FIGS. 20 to 22, the value of T may be set independently for each case. For example, T may be a value of 260 ns or less. In one example, T may be 10 ns. Furthermore, the T value may depend on the bandwidth combination or numerology of the CCs. The LMF may determine the T value. For example, the LMF may determine which positioning technique to use, which may determine the T value.

In the following, the positioning accuracy gain when the TAE satisfies certain requirements is described in detail. For example, the accuracy gains that can be achieved when the TAE is within the specified requirements for intra-band contiguous CAs are described.

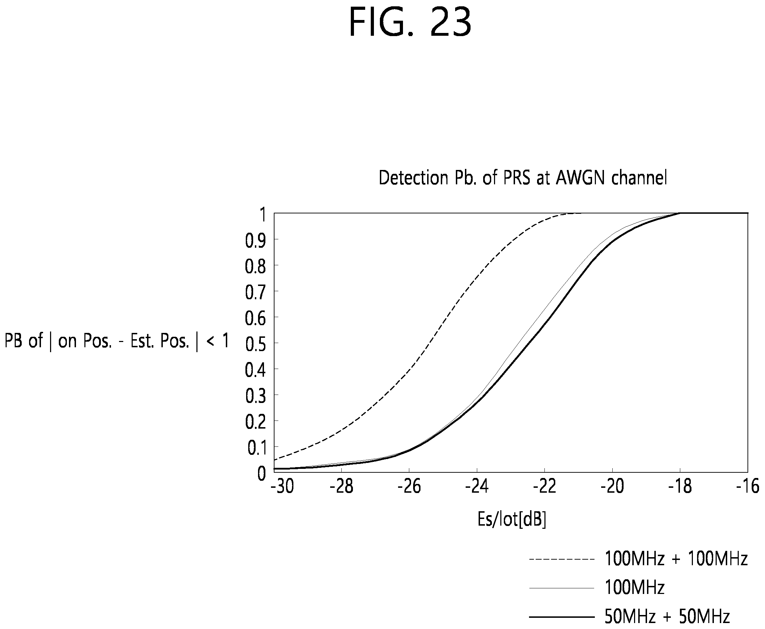

Before determining the achievable accuracy gain when the TAE is within the specified requirement for intra-band contiguous CA, a link-level simulator was used to determine the achievable detection probability gain when the TAE is zero. The example in Figure 23 shows the achievable detection probability gain when TAE is zero.

The following drawings are provided to illustrate specific examples of this specification. The names of specific devices or specific signals/messages/fields shown in the drawings are provided as examples, and the technical features of this specification are not limited to the specific names used in the following drawings.

**FIG. 23 is an example of the probability of detection when TAE is zero in one embodiment of the present disclosure.**

The example in FIG. 23 shows the simulation results of the detection probability of BW aggregation in an additive white gaussian noise (AWGN) channel environment.

From the results in FIG. 23, it can be seen that only 50 MHz+50 MHz and 100 MHz have similar performance. The detection probability gain of 100 MHz + 100 MHz is about 3 dB compared to 100 MHz or 50 MHz + 50 MHz. In the example of FIG. 23, Es/Iot may be, for example, a signal-to-noise ratio. Es may be the received energy per resource element (RE). Io t may be the received power spectral density of the total noise and interference for a particular RE. For example, Iot may be a value measured at the UE antenna connector or at the radiating interface boundary. Iot may be the sum of all RE powers norm alized by the subcarrier spacing.

Here, the definition of 'detect' may mean |ideal position - estimated position| < 1 sample (if based on 1 oversamplin g). In various examples of the disclosure, 'sample' may mean Ts. For example, Ts may be Ts=1/($\Delta f_{ref}$* $N_{f,ref}$) where $\Delta f_{ref}$=15 *10^3 Hz and $N_{f,ref}$=2048.

The minimum requirement for TAE may be 260 ns for in-band continuous carrier aggregation. The 260 ns may be b ased on the TAE spec requirement of 260 ns in 3GPP TS 38.104 V17.7.0 S6.5.3.2. In inband contiguous carrier aggregation, t he minimum requirement for TAE may be 260 ns. A sufficiently small TAE value to satisfy the requirement is identified. Oth er detailed simulation assumptions are shown in Table 6 below.

[Table 6]

| Parameter | Setting |
|---|---|
| Scenario | Single Tab |
| Carrier frequency | 3.5GHz |
| Bandwidth | 50+50MHz 100+100MHz |
| SCS | 60kHz |
| PRS related | $T_{rep}^{PRS} = 1, L_{PRS} = 12, K_{comb}^{PRS} = 12$ , |

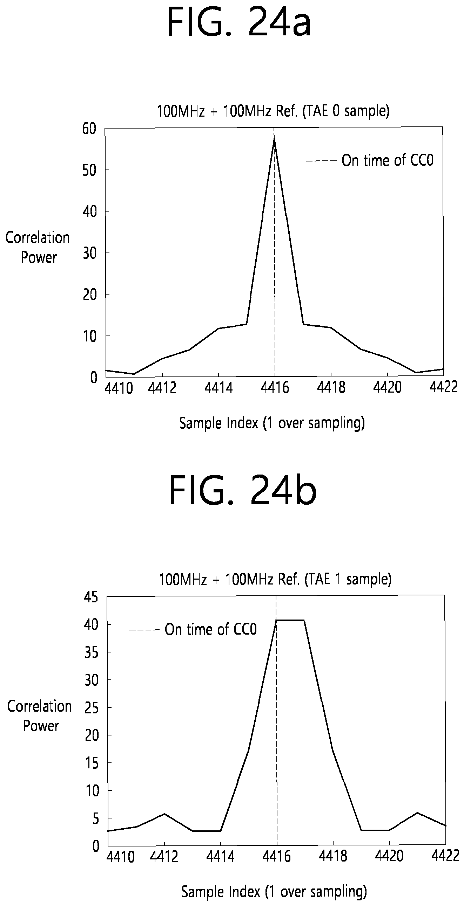

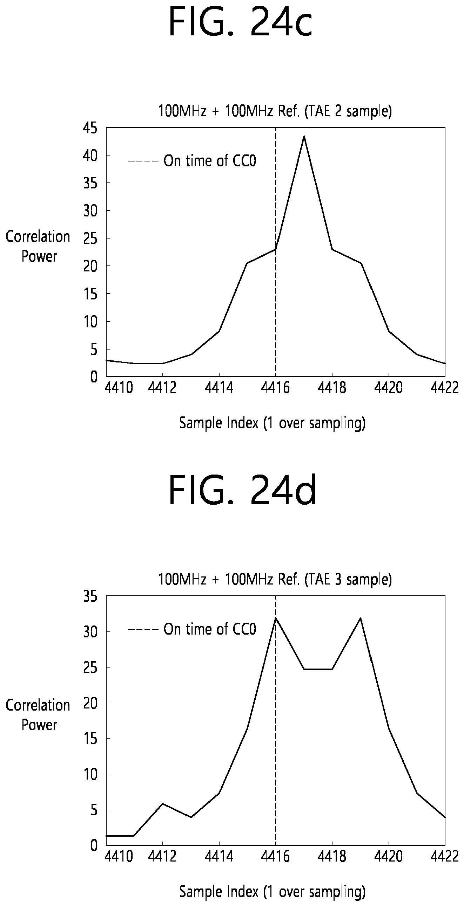

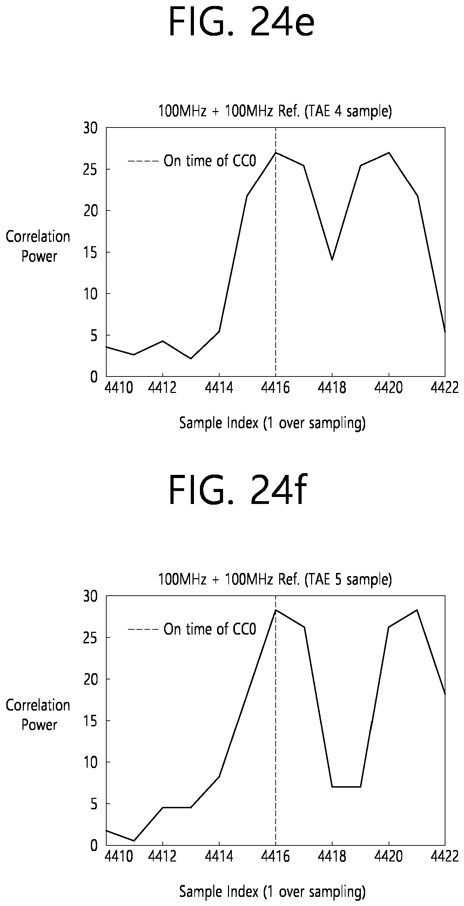

Table 6 refers to simulation assumptions in FR1-1. The illustrations of FIGS. 24a to 25d described below may be th e result of a simulation based on the simulation assumptions in Table 6. According to the example in Table 6, the scenario ma y be performed in a single tap scenario. The carrier frequency may be 3.5 GHz. The bandwidth is assumed to be 50+50 MHz and 100+100 MHz. SCS can be 60 kHz. PRS related can mean parameters related to PRS. $T_{rep}^{PRS}$ can be the repetition factor. $L_{PRS}$ can be the size of the downlink PRS resource in the time domain. $K_{comb}^{PRS}$ can be the comb size.

To illustrate the accuracy gain as a function of the TAE value, reference is made to FIGS. 24a to 24f below.

The following drawings are provided to illustrate specific examples of this specification. The names of specific devi ces or specific signals/messages/fields shown in the drawings are provided as examples, and the technical features of this spec ification are not limited to the specific names used in the following drawings.

FIGS. 24a to **24f show** an example of the correlation power according to TAE in one embodiment of the prese nt disclosure.

FIGS. 24a to FIG. 24f are examples of one shot correlation power in an ES/Iot 30 dB single tap environment accord ing to TAE.

For example, a single tap environment means a single path environment. For example, it can also refer to an AWGN channel. One-shot means that the simulation was run once, without any coherent or non-coherent accumulation performed to i mprove performance. correlation power can mean cross correlation power. For example, correlation was performed once with a known signal.

To determine the accuracy gain as a function of TAE value, a baseline performance with a TAE of 0 can be used. T he example in Figure 24a is an example of baseline performance with a TAE of 0.

The examples of FIGS. 24a to 24f illustrate examples of Positioning Reference Signal (PRS) correlation output pow er at a receiver based on TAE values. Referring to the examples of FIGS. 24a to 24f, there are one or two peak positions depe nding on the TAE value. For example, in the example of FIG. 24a, when TAE is 0 samples, there is one peak position.

FIGS. 24a to 24f are various examples where the TAE is 0 samples to 5 samples, respectively. The ideal position in dex of CC0 is 4416, and the ideal position of CC1 may be delayed by the TAE value. For example, as shown in the example i n FIG. 24d, for a TAE value of 3 samples, there are two peak positions at 4416 and 4419. And, as shown in the example in FI G. 24c, for a TAE value of 2 samples, there is only one peak position at 4417, which is the midpoint between 4416 and 4418.

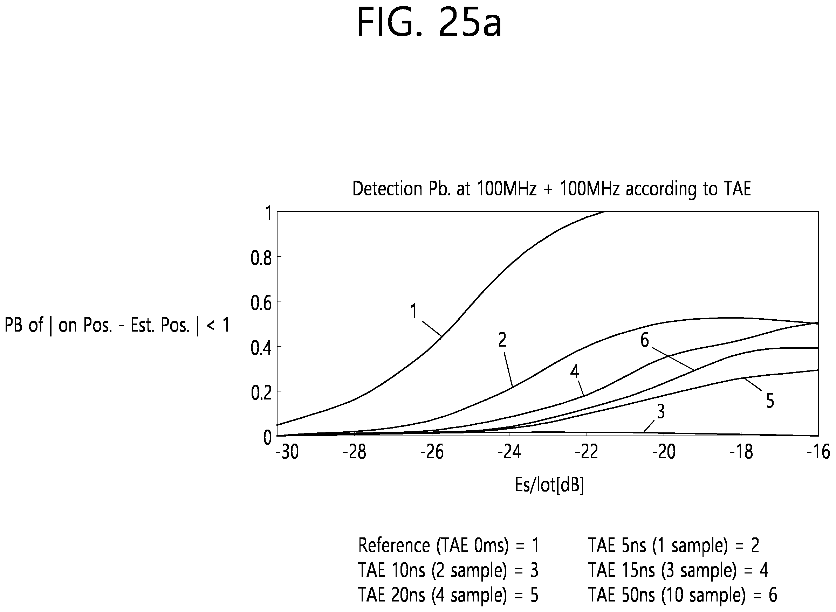

As the TAE value increases, the probability of detection based on a detection window of |On Pos.-Est.Pos.|<1 may b ecome very low (see example in FIG. 25a). For example, as the TAE value increases, the probability of detection may decreas e not only for detection windows of less than 1 sample, but also for detection windows based on 2 samples, 3 samples, etc. Ho wever, the rate at which the probability of detection decreases may decrease as the range of the detection window increases. H ere, On Pos can mean the ideal position and Est.Pos. can mean the estimated position.

The following drawings are provided to illustrate specific examples of this specification. The names of specific devi ces or specific signals/messages/fields shown in the drawings are provided as examples, and the technical features of this spec ification are not limited to the specific names used in the following drawings.

**FIGS. 25a to 25d show an example of an accuracy gain according to TAE in another 100 MHz+100 MHz exa mple of one embodiment of the present disclosure.**

FIGS. 25a to 25d illustrate example detection probabilities based on TAE values.

In the detection probability labels of FIGS. 25a to 25d, the meaning of 'On pos.' may refer to the ideal position of C C0.

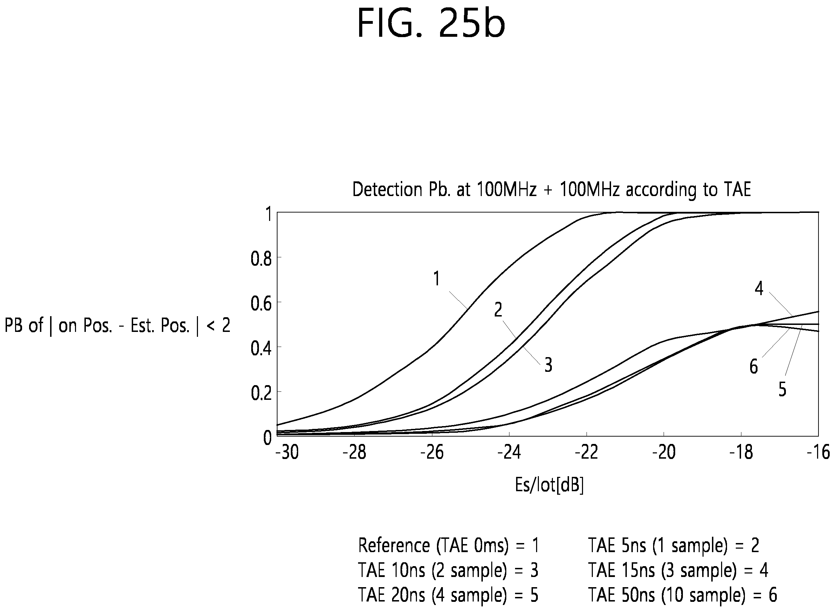

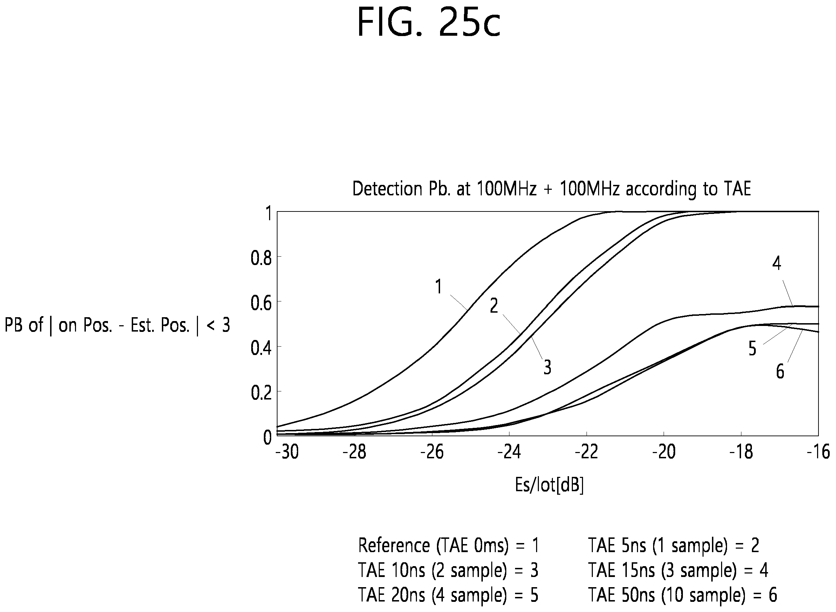

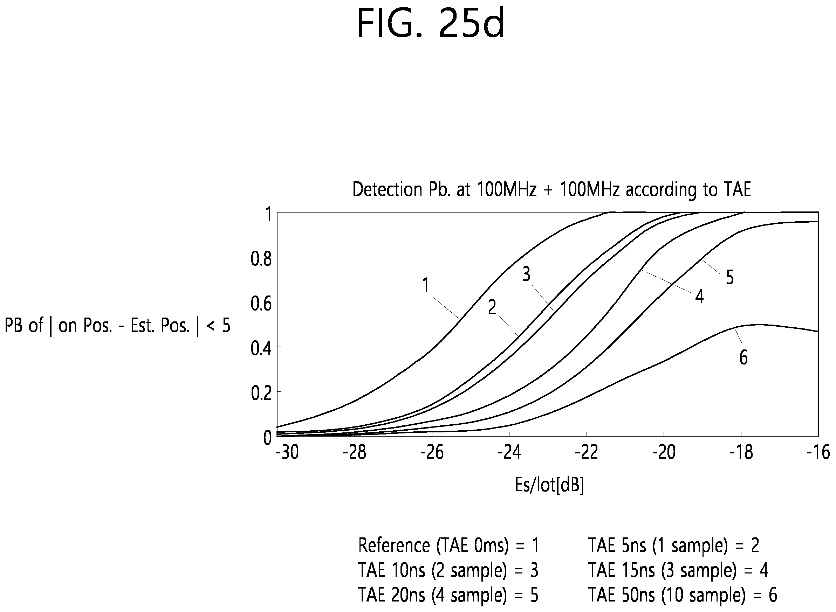

Referring to FIGS. 25a to 25d, respectively, there are cumulative distribution functions (CDFs) according to the TA E for four kinds of detection windows: less than one sample, less than two samples, less than three samples, and less than five samples. For example, the example in FIG. 25a shows the cumulative distribution function (CDF) according to the TAE when |On Pos.-Est.Pos.| is less than one sample. The example of FIG. 25b illustrates a CDF based on a TAE where | On Pos.-Est.Pos .| is less than 2 samples, the example of FIG. 25c illustrates a CDF based on a TAE where |On Pos.-Est.Pos.| is less than 3 sam ples, and the example of FIG. 25d illustrates a CDF based on a TAE where |On Pos.-Est.Pos.| is less than 5 samples. For exam ple, the examples of FIGS. 25a to 25d may be simulation results to verify the performance of positioning according to the TA E. The results may be indicative of the error of positioning according to the TAE. For example, in FIGS. 25a to 25d, the positi oning performance was simulated by varying the criterion of whether the difference between the ideal position and the measu red position is considered to be an accuracy measurement when it is within a certain range.

According to the simulation results in FIGS. 25a to 25d, a performance degradation of almost 2 dB is observed com pared to the baseline performance even at a TAE value of 5 ns ($\fallingdotseq$ 1/BW), due to the PRS correlation peak power reduction wi th separated peak positions in FIGS. 24a to 24f. In a no oversample situation (i.e., no oversample beyond the default sampling rate of 1 oversample), the time per 1 sample can be 5 ns (=1/200 MHz) in the 200 MHz band. The simulation is based on 1 ov er sample, so 1 sample at 200 MHz (100 + 100 MHz) can be 5 ns. It can also be seen in FIG. 25b that there is approximately 2 dB degradation for a 1 sample time error compared to the reference performance.

Therefore, to obtain sufficient accuracy gain from BW aggregation, the TAE value must be close to zero. To ensure near-zero TAE in in-band contiguous CAs, a single-chain Tx/Rx architecture should be the baseline for PRS BW aggregation.

Therefore, a single-chain Tx/Rx architecture can be used to achieve PRS BW aggregation gain.

The following drawings are provided to illustrate specific examples of this specification. The names of specific devi ces or specific signals/messages/fields shown in the drawings are provided as examples, and the technical features of this spec ification are not limited to the specific names used in the following drawings.

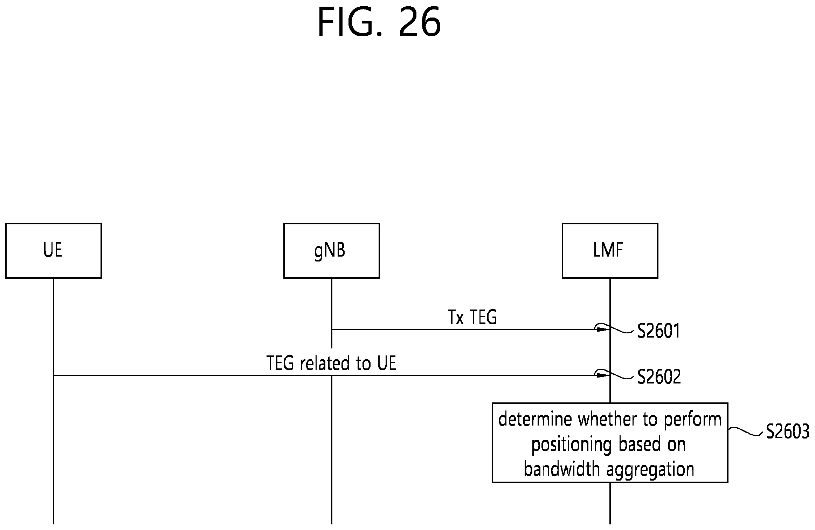

**FIG. 26 shows an example of a procedure according to one embodiment of the present disclosure.**

For example, for the example of FIG. 26, the operations previously described in the examples of FIGS. 6a to 25 ma y also be applied. For example, even if the operations, contents, etc. are not directly described in the example of FIG. 26, the o perations, contents, etc. described in the various examples of the disclosure may be applied.

For example, the UE, gNB, LMF illustrated in the example of FIG. 26 may perform the service request procedure il lustrated in FIGS. 6a to 7. For example, the UE, gNB, LMF illustrated in the example of FIG. 26 may perform the positioning -related procedures illustrated in FIGS. 8 to 22.

Actions not shown in the example of FIG. 26 may be performed. For example, the UE may send a request message t o the LMF requesting location information. For example, the request message may be a Location Request (LR) request messa ge. The UE may transmit the request message to the AMF via the base station (e.g., NG-RAN, gNB, etc.). The AMF may perf orm a procedure to select an LMF. The AMF may forward the request message to the LMF. The LMF may perform a UE pos itioning procedure to determine the UE's location information, and then send a response message to the UE containing the UE 's location information. The response message may be, for example, an LR response message.

In step (S2601), the gNB may transmit the Tx TEG to the LMF. Note that if positioning based on UL-TDOA is perf ormed, step S2601 may be omitted.

In step S2602, the UE may transmit the TEG related to the UE to the LMF. The UE may transmit the TEGs related t o the UE to the gNB, and the gNB may transmit the TEGs related to the UE to the LMF. The TEG related to the UE may be o ne or more of, for example, an Rx TEG, a Tx TEG, and an RxTX TEG.

In step S2603, the LMF may determine whether to perform positioning based on bandwidth aggregation. For examp le, the LMF may determine whether to perform positioning based on bandwidth aggregation positioning or single carrier posit ioning, based on at least one of the Tx TEG of the base station and the TEG related to the UE.

For example, the LMF may determine whether to perform positioning based on bandwidth aggregation positioning o r single carrier positioning, based on comparing the sum of the base station's Tx TEGs and the TEGs related to the UE to a thr eshold.

When positioning is performed based on DL-TDOA, the LMF may perform bandwidth aggregation positioning if th e sum of the base station's Tx TEG and the UE's Rx TEG is less than the first threshold. If the positioning is performed based on DL-TDOA, the LMF may perform single carrier positioning if the sum of the base station's Tx TEG and the UE's Rx TEG is greater than or equal to the first threshold.

If the positioning is performed based on UL-TDOA, the LMF may perform bandwidth aggregation positioning if the sum of the UE's Tx TEGs is less than the second threshold. If the positioning is performed based on UL-TDOA, the LMF may perform single carrier positioning if the sum of the UE's Tx TEGs is greater than or equal to the second threshold.

When positioning is performed based on multi-cell RTT, the LMF may perform bandwidth aggregation positioning if the sum of the base station's Tx TEG and the UE's RxTx TEG is less than the first threshold. If the sum of the base station's Tx TEG and the UE's RxTx TEG is greater than or equal to the first threshold, the LMF may perform single carrier positioning.

After step S2603, the LMF may perform bandwidth aggregation positioning or single carrier positioning. Based on the positioning, the LMF may determine the location of the UE. The LMF may utilize the UE's location. For example, the LMF may transmit the UE's location information to the UE or the gNB.

According to the various examples in the present disclosure, the bandwidth aggregation method for positioning enhancement can be used effectively. For example, the bandwidth aggregation method can be operated based on the Tx TEG and Rx TEG values of the TRP and UE. For example, bandwidth aggregation can also be operated based on the bandwidth or numerology of each CC.

The present disclosure can have a variety of effects.

For example, it can improve the accuracy of positioning. For example, LMF can determine whether to apply the bandwidth aggregation positioning technique based on the level of timing alignment error between CCs. Accordingly, if the timing alignment error is large, the accuracy problem caused by the bandwidth aggregation positioning technique can be solved. For example, if the timing alignment error between CCs is small, the accuracy of positioning can be improved by using bandwidth aggregation positioning.

The effects that may be obtained from the specific examples of this disclosure are not limited to those listed above. For example, there may be a variety of technical effects that a person having ordinary skill in the related art may understand or infer from this disclosure. Accordingly, the specific effects of the present disclosure are not limited to those expressly set forth herein, but may include a variety of effects that may be understood or inferred from the technical features of the present disclosure.

For reference, the operation of the terminal (e.g., UE) described in the present specification may be implemented by the apparatus of FIGS. 1 to 4 described above. For example, the terminal(e.g., UE) may be the first device 100 or the second device 200 of FIG. 2. For example, an operation of a terminal(e.g., UE) of the present disclosure may be processed by one or more processors 102 or 202. The operation of the terminal of the present disclosure may be stored in one or more memories 104 or 204 in the form of an instruction/program (e.g., instruction, executable code) executable by one or more processors 102 or 202. One or more processors 102 or 202 control one or more memories 104 or 204 and one or more transceivers 105 or 206, and may perform the operation of the terminal of the present disclosure by executing instructions/programs stored in one or more memories 104 or 204.

In addition, instructions for performing an operation of a terminal described in the present disclosure of the present specification may be stored in a non-volatile computer-readable storage medium in which it is recorded. The storage medium may be included in one or more memories 104 or 204. And, the instructions recorded in the storage medium may be executed by one or more processors 102 or 202 to perform the operation of the terminal (e.g., UE) described in the present disclosure of the present specification.

For reference, the operation of a network node or base station (e.g., LMF, AMF, SMF, UPF, PCF, AUSF, etc.) of the present disclosure may be implemented by the apparatus of FIGS. 1 to 3 to be described below. For example, a network node or a base station may be the first device 100 of FIG.2 or the second device 200 of FIG.2. For example, the operation of a network node or base station of the present disclosure may be processed by one or more processors 102 or 202. The operation of the terminal of the present disclosure may be stored in one or more memories 104 or 204 in the form of an instruction/program (e.g., instruction, executable code) executable by one or more processors 102 or 202. One or more processors 102 or 202 may perform the operation of a network node or a base station of the present disclosure, by controlling one or more memories 104 or 204 and one or more transceivers 106 or 206 and executing instructions/programs stored in one or more memories 104 or 204.

In addition, instructions for performing the operation of the network node or base station described in the present disclosure of the present specification may be stored in a non-volatile (or non-transitory) computer-readable storage medium. The storage medium may be included in one or more memories 104 or 204. And, the instructions recorded in the storage medium are executed by one or more processors 102 or 202, so that the operations of a network node or base station are performed.

In the above, preferred embodiments have been exemplarily described, but the present disclosure of the present specification is not limited to such specific embodiments, and thus, modifications, changes, or may be improved.

In the exemplary system described above, the methods are described on the basis of a flowchart as a series of steps or blocks, but are not limited to the order of the steps described, some steps may occur in a different order or concurrent with o ther steps as described above. In addition, those skilled in the art will understand that the steps shown in the flowchart are not exclusive and that other steps may be included or that one or more steps of the flowchart may be deleted without affecting the scope of rights.

The claims of the present disclosure may be combined in various ways. For example, the technical features of the m ethod claims of the present specification may be combined and implemented as an apparatus, and the technical features of the apparatus claims of the present specification may be combined and implemented as a method. In addition, the technical featur es of the method claim of the present specification and the technical features of the apparatus claim may be combined to be im plemented as an apparatus, and the technical features of the method claim of the present specification and the technical featur es of the apparatus claim may be combined and implemented as a method.

**Claims**

1.  A method for performing communication, the method performed by an Location Management Function (LMF) and comprising:

    receiving a transmit (Tx) timing error group (TEG) of a base station from the base station,
    receiving a TEG related to a user equipment (UE) from the UE,
    wherein the TEG related to the UE includes at least one of a Reception (Rx) TEG, a Tx TEG, and an RxTx TEG; and
    determining whether to perform positioning based on a bandwidth aggregation positioning or a single carrier positioning, based on the at least one of the Tx TEG of the base station and the TEG related to the UE.

2.  The method of claim 1,
    wherein whether to perform positioning based on a bandwidth aggregation positioning or a single carrier positioning is determined, based on comparing the sum of the Tx TEGs of the base station and the TEGs related to the UE with a threshold value.

3.  The method of claim 1, further comprising:
    based on that the positioning is performed based on DownLink - Time Difference Of Arrival (DL-TDOA), performing the bandwidth aggregation positioning based on the sum of the Tx TEG of the base station and the Rx TEG of the UE being less than a first threshold.

4.  The method of claim 1, further comprising:
    based on that the positioning is performed based on DL-TDOA, performing the single carrier positioning based on the sum of the Tx TEG of the base station and the Rx TEG of the UE being lager than or equal to a first threshold.

5.  The method of claim 1, further comprising:
    based on that the positioning is performed based on UpLink - Time Difference Of Arrival (UL-TDOA), performing the bandwidth aggregation positioning based on the Tx TEG of the UE being less than a second threshold.

6.  The method of claim 1, further comprising:
    based on that the positioning is performed based on UL-TDOA, performing the single carrier positioning based on the Tx TEG of the UE being larger than or equal to a second threshold.

7.  The method of claim 1, further comprising:
    based on that the positioning is performed based on a multi-cell round trip time (RTT), performing the bandwidth aggregation positioning based on the sum of the Tx TEG of the base station and the RxTx TEG of the UE's being less than a third threshold.

8.  The method of claim 1, further comprising:
    based on that the positioning is performed based on multi-cell RTT, performing the single carrier positioning based on the sum of the Tx TEG of the base station and the RxTx TEG of the UE being larger than or equal to a third threshold.

9.  An Location Management Function (LMF) configured to operate in a wireless communication system, the LMF comprising:

    at least one transceiver;

at least one processor; and

at least one computer memory operably connectable to the at least one processor and storing instructions that, based on being executed by the at least one processor, perform operations comprising:

> receiving a transmit (Tx) timing error group (TEG) of a base station from the base station;
> receiving a TEG related to a user equipment (UE) from the UE,
> wherein the TEG related to the UE includes at least one of a Reception (Rx) TEG, a Tx TEG, and an RxTx TEG; and
> determining whether to perform positioning based on a bandwidth aggregation positioning or a single carrier positioning, based on the at least one of the Tx TEG of the base station and the TEG related to the UE.

10. A method for performing communication, the method performed by an User Equipment (UE) and comprising:

> transmitting a service request message;
> receiving a service accept message; and
> transmitting a timing error group (TEG) related to the UE to an Location Management Function (LMF),
> wherein the TEG related to the UE includes at least one of a Reception (Rx) TEG, a Transmission (Tx) TEG, and an RxTx TEG; and
> wherein the TEG related to the UE is used by the LMF to determine whether to perform positioning based on a bandwidth aggregation positioning or a single carrier positioning.

11. A user equipment (UE) configured to operate in a wireless communication system, the UE comprising:

> at least one transceiver;
> at least one processor; and
> at least one computer memory operably connectable to the at least one processor and storing instructions that, based on being executed by the at least one processor, perform operations comprising:

> > transmitting a service request message;
> > receiving a service accept message; and
> > transmitting a timing error group (TEG) related to the UE to an Location Management Function (LMF),
> > wherein the TEG related to the UE includes at least one of a Reception (Rx) TEG, a Transmission (Tx) TEG, and an RxTx TEG; and
> > wherein the TEG related to the UE is used by the LMF to determine whether to perform positioning based on a bandwidth aggregation positioning or a single carrier positioning.

12. An apparatus in mobile communication comprising:

> at least one transceiver;
> at least one processor; and
> at least one computer memory operably connectable to the at least one processor and storing instructions that, based on being executed by the at least one processor, perform operations comprising:

> > transmitting a service request message;
> > receiving a service accept message; and
> > transmitting a timing error group (TEG) related to the apparatus to an Location Management Function (LMF),
> > wherein the TEG related to the apparatus includes at least one of a Reception (Rx) TEG, a Transmission (Tx) TEG, and an RxTx TEG; and
> > wherein the TEG related to the apparatus is used by the LMF to determine whether to perform positioning based on a bandwidth aggregation positioning or a single carrier positioning.

13. A non-transitory Computer Readable Medium (CRM) storing instructions that, based on being executed by at least one processor, perform operations comprising:

> transmitting a service request message;
> receiving a service accept message; and
> transmitting a timing error group (TEG) related to a device including the CRM to an Location Management Function (LMF),

wherein the TEG related to the device includes at least one of a Reception (Rx) TEG, a Transmission (Tx) TEG, and an RxTx TEG; and

wherein the TEG related to the device is used by the LMF to determine whether to perform positioning based on a bandwidth aggregation positioning or a single carrier positioning.

# FIG. 1

1

100e
Home Appliance

100f
IoT device

400
AI Server/device

100a
Robot

200
Network
(5G)

300

200a

200

200

150a

150c

100d
Hand-held
device

100c
XR device

150a
100b-1
Vehicle

150b
Vehicle
100b-2

EP 4 615 082 A1

# FIG. 2

EP 4 615 082 A1

# FIG. 3

# FIG. 4

EP 4 615 082 A1

# FIG. 5

# FIG. 6a

EP 4 615 082 A1

# FIG. 6b

UE | (R)AN | AMF | UPF (new I-UPF) | SMF | UPF (old I-UPF) | UPF (PSA) | PCF | AUSF

11. Nsmf_PDUSession_UpdateSMContext Response

12. N2 Request

13. RRC signalling

Uplink data (case : new I-UDF is inserted or I-UPF is relocated)

Uplink data (case : I-UPF is removed)

14. N2 Request Ack

15. Nsmf_PDUSession_UpdateSMContext Request

16. SMF initiated SM policy Association Modification

I-UPF

17a. N4 session Modification Request

17b. N4 session Modification Response

Downlink data

EP 4 615 082 A1

# FIG. 6c

EP 4 615 082 A1

Diagram participants (left to right): UE, (R)AN, AMF, UPF (new I-UPF), SMF, UPF (old I-UPF), UPF (PSA), PCF, AUSF

No I-UPF

18a. N4 session Modification Request

18b. N4 session Modification Response

Downlink data

19. Nsmf_PDUSession_UpdateSMContext Response

20a. N4 session Modification Request

20b. N4 session Modification Response

21a. N4 session Modification Request

21b. N4 session Modification Response

22a. N4 session Modification Request or N4 Session Release Request

22a. N4 session Modification Response or N4 Session Release Response

# FIG. 7

EP 4 615 082 A1

# FIG. 8

$gNB_0$

$gNB_1$

$t_0$

$t_1$

$t_0 - t_1$

# FIG. 9

FIG. 10

# FIG. 11

# FIG. 12

# FIG. 13

# FIG. 14

RTT = gNB Rx-Tx Time
Difference +
UE Rx-Tx Time Difference

$gNB_0$

PRS      SRS

UE

# FIG. 15

EP 4 615 082 A1

# FIG. 16

# FIG. 17

# FIG. 18

EP 4 615 082 A1

# FIG. 19

UE    NG-RAN    AMF    LMF

1. Namf_Communication_N1N2MessageTransfer
(Network Positioning Message)

2. Network Triggered Service Request

3. N2 Transport
(Network Positioning Message)

4. Obtain Measurements

5. N2 Transport
(Network Positioning Message)

6. Namf_Communication_N2InfoNotify
(Network Positioning Message)

EP 4 615 082 A1

# FIG. 20

```
            ┌─────────────────────┐
            │   Receive TRP Tx TEG │
            │     and UE Rx TEG    │
            └─────────────────────┘
                      │
                      ▼
              ╱─────────────╲
  YES        ╱  TRP Tx TEG +  ╲
◄───────────       UE Rx TEG < T
             ╲               ╱
              ╲─────────────╱
  │                   │ NO
  ▼                   ▼
┌─────────────────┐ ┌─────────────────────┐
│Bandwidth Aggregation│ │Single carrier Positioning│
│   Positioning   │ └─────────────────────┘
└─────────────────┘
```

# FIG. 21

```
            ┌─────────────────────┐
            │    Receive UE Tx TEG │
            └─────────────────────┘
                      │
                      ▼
              ╱─────────────╲
  YES        ╱               ╲
◄───────────     UE Tx TEG < T
             ╲               ╱
              ╲─────────────╱
  │                   │ NO
  ▼                   ▼
┌─────────────────┐ ┌─────────────────────┐
│Bandwidth Aggregation│ │Single carrier Positioning│
│   Positioning   │ └─────────────────────┘
└─────────────────┘
```

# FIG. 22

```
┌─────────────────────────┐
│   Receive TRP Tx TEG    │
│    and UE RxTx TEG      │
└─────────────────────────┘
             │
             ▼
YES    ◇ TRP Tx TEG +      ◇
◄──────  UE RxTx TEG < T
             │ NO
             ▼
┌──────────────────┐     ┌──────────────────────┐
│ Bandwidth        │     │ Single carrier       │
│ Aggregation      │     │ Positioning          │
│ Positioning      │     │                      │
└──────────────────┘     └──────────────────────┘
```

# FIG. 23

Detection Pb. of PRS at AWGN channel

PB of | on Pos. - Est. Pos. | < 1

Es/Iot[dB]

- - - - - - -  100MHz + 100MHz
———————  100MHz
————————  50MHz + 50MHz

# FIG. 24a

100MHz + 100MHz Ref. (TAE 0 sample)

Correlation Power

Sample Index (1 over sampling)

# FIG. 24b

100MHz + 100MHz Ref. (TAE 1 sample)

Correlation Power

Sample Index (1 over sampling)

# FIG. 24c

100MHz + 100MHz Ref. (TAE 2 sample)

Correlation Power

Sample Index (1 over sampling)

# FIG. 24d

100MHz + 100MHz Ref. (TAE 3 sample)

Correlation Power

Sample Index (1 over sampling)

# FIG. 24e

100MHz + 100MHz Ref. (TAE 4 sample)

---- On time of CC0

Correlation Power

Sample Index (1 over sampling)

# FIG. 24f

100MHz + 100MHz Ref. (TAE 5 sample)

---- On time of CC0

Correlation Power

Sample Index (1 over sampling)

# FIG. 25a

Detection Pb. at 100MHz + 100MHz according to TAE

PB of | on Pos. - Est. Pos. | < 1

Es/Iot[dB]

Reference (TAE 0ms) = 1  TAE 5ns (1 sample) = 2
TAE 10ns (2 sample) = 3  TAE 15ns (3 sample) = 4
TAE 20ns (4 sample) = 5  TAE 50ns (10 sample) = 6

# FIG. 25b

Detection Pb. at 100MHz + 100MHz according to TAE

PB of | on Pos. - Est. Pos. | < 2

Es/Iot[dB]

Reference (TAE 0ms) = 1      TAE 5ns (1 sample) = 2
TAE 10ns (2 sample) = 3      TAE 15ns (3 sample) = 4
TAE 20ns (4 sample) = 5      TAE 50ns (10 sample) = 6

# FIG. 25c

Detection Pb. at 100MHz + 100MHz according to TAE

PB of | on Pos. - Est. Pos. | < 3

Es/Iot[dB]

Reference (TAE 0ms) = 1          TAE 5ns (1 sample) = 2
TAE 10ns (2 sample) = 3          TAE 15ns (3 sample) = 4
TAE 20ns (4 sample) = 5          TAE 50ns (10 sample) = 6

EP 4 615 082 A1

# FIG. 25d

Detection Pb. at 100MHz + 100MHz according to TAE

PB of | on Pos. - Est. Pos. | < 5

Es/Iot[dB]

Reference (TAE 0ms) = 1     TAE 5ns (1 sample) = 2
TAE 10ns (2 sample) = 3     TAE 15ns (3 sample) = 4
TAE 20ns (4 sample) = 5     TAE 50ns (10 sample) = 6

# FIG. 26

UE      gNB      LMF

Tx TEG — S2601

TEG related to UE — S2602

determine whether to perform positioning based on bandwidth aggregation — S2603

EP 4 615 082 A1

## INTERNATIONAL SEARCH REPORT

International application No.

**PCT/KR2023/017524**

### A. CLASSIFICATION OF SUBJECT MATTER

**H04W 64/00**(2009.01)i; **H04W 56/00**(2009.01)i; **H04B 17/20**(2015.01)i; **H04W 24/08**(2009.01)i; **H04W 4/029**(2018.01)i; **H04L 5/00**(2006.01)i

According to International Patent Classification (IPC) or to both national classification and IPC

### B. FIELDS SEARCHED

Minimum documentation searched (classification system followed by classification symbols)

H04W 64/00(2009.01); G01S 5/02(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: timing error group(TEG), 포지셔닝(positioning), TDOA, RTT(round trip time), Location Management Function(LMF)

### C. DOCUMENTS CONSIDERED TO BE RELEVANT

| Category* | Citation of document, with indication, where appropriate, of the relevant passages | Relevant to claim No. |
|---|---|---|
| Y | INTERDIGITAL, INC. Discussion on accuracy improvements by mitigating timing delays. R1-2104871, 3GPP TSG RAN WG1 #105-e, e-Meeting. 12 May 2021.<br>See section 3. | 1-13 |
| Y | ZTE CORPORATION. Further discussion on CA based positioning enhancement. R4-2216541, 3GPP TSG-RAN WG4 Meeting#104bis-e, E-meeting. 30 September 2022.<br>See section 2.2.1; and figure 2.2.1-1. | 1-13 |
| A | NOKIA et al. Discussion on NR positioning measurement accuracy improvement based on bandwidth aggregation. R4-2216227, 3GPP TSG-RAN WG4 Meeting #104bis-e, Electronic Meeting. 30 September 2022.<br>See sections 2.1-2.5. | 1-13 |
| A | MODERATOR (ERICSSON). Email discussion summary for [104-bis-e][220] FS_NR_pos_enh2_RRM. R4-2217153, 3GPP TSG-RAN WG4 Meeting # 104bis-e, Electronic Meeting. 26 October 2022.<br>See section 1.2. | 1-13 |

☑ Further documents are listed in the continuation of Box C.  ☑ See patent family annex.

| | | |
|---|---|---|
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **07 February 2024** | **07 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/017524** |

### C. DOCUMENTS CONSIDERED TO BE RELEVANT

| Category* | Citation of document, with indication, where appropriate, of the relevant passages | Relevant to claim No. |
| --- | --- | --- |
| A | WO 2022-207857 A1 (TELEFONAKTIEBOLAGET LM ERICSSON (PUBL)) 06 October 2022 (2022-10-06)<br>    See paragraphs [0189]-[0217]; and figures 20-24. | 1-13 |

Form PCT/ISA/210 (second sheet) (July 2022)

INTERNATIONAL SEARCH REPORT
Information on patent family members

International application No.

**PCT/KR2023/017524**

| Patent document cited in search report | Publication date (day/month/year) | Patent family member(s) | Publication date (day/month/year) |
|---|---|---|---|
| WO 2022-207857 A1 | 06 October 2022 | KR 10-2023-0164149 A | 01 December 2023 |

Form PCT/ISA/210 (patent family annex) (July 2022)